(19) Europäisches Patentamt / European Patent Office / Office européen des brevets

(11) **EP 2 317 769 A1**

(12) **EUROPEAN PATENT APPLICATION**

(43) Date of publication:
**04.05.2011 Bulletin 2011/18**

(51) Int Cl.:
**H04N 7/26** (2006.01)   **H04N 7/50** (2006.01)
**H04N 7/32** (2006.01)

(21) Application number: **09013755.5**

(22) Date of filing: **02.11.2009**

(84) Designated Contracting States:
**AT BE BG CH CY CZ DE DK EE ES FI FR GB GR HR HU IE IS IT LI LT LU LV MC MK MT NL NO PL PT RO SE SI SK SM TR**
Designated Extension States:
**AL BA RS**

(71) Applicant: **Panasonic Corporation**
**Kadoma-shi**
**Osaka 571-8501 (JP)**

(72) Inventors:
• **Narroschke, Matthias, Dr.**
  **63225 Langen (DE)**
• **Drugeon, Virginie**
  **63225 Langen (DE)**

(74) Representative: **Grünecker, Kinkeldey,**
**Stockmair & Schwanhäusser**
**Anwaltssozietät**
**Leopoldstrasse 4**
**80802 München (DE)**

(54) **Luminance dependent quantization**

(57)   The present invention provides a method for encoding, a method for decoding, an apparatus for encoding and an apparatus for decoding a video signal. At the encoder side as well as at the decoder side, a quantization step size is determined for a local region of an image based on its luminance and/or the luminance of the neighbouring pixels. The local determination enables adaptive quantization depending on the image content. Employing the luminance of the image area and/or the neighbouring pixels for controlling the quantization step size further enables performing the control in the same way at the encoder and at the decoder without need for further signalling.

# Fig. 10

Reference quantizer

Quantizer, which exploits the Weber Fechner law  1010

# Fig. 11

**Description**

The present invention relates to a method and an apparatus for video encoding and decoding applying quantization.

BACKGROUND OF THE INVENTION

At present, the majority of standardized image and video coding algorithms is based on hybrid video coding. Hybrid video coding methods combine several different lossless and lossy compression schemes in order to achieve the desired compression gain and/or image quality. Hybrid video coding is also the basis for ITU-T standards (H.26x standards such as H.261, H.263) as well as ISO/IEC standards (MPEG-X standards such as MPEG-1, MPEG-2, and MPEG-4). The most recent and advanced video coding standard is currently the standard denoted as H.264/MPEG-4 advanced video coding (AVC) which is a result of standardization efforts by joint video team (JVT), a joint team of ITU-T and ISO/IEC MPEG.

A video signal input to an encoder is a sequence of images called frames, each frame being a two-dimensional matrix of pixels. All the above-mentioned standards based on hybrid video coding include subdividing each individual video frame into smaller blocks consisting of a plurality of pixels. Typically, a macroblock (usually denoting a block of 16 x 16 pixels) is the basic image element, for which the encoding is performed. However, various particular encoding steps may be performed for smaller image elements, denoted submacroblocks or simply blocks and having the size of, for instance, 8 x 8, 4 x 4, 16 x 8, etc.

Typically, the encoding steps of a hybrid video coding include a spatial and/or a temporal prediction. Accordingly, each block to be encoded is first predicted using either the blocks in its spatial neighborhood or blocks from its temporal neighborhood, i.e. from previously encoded video frames. A block of differences between the block to be encoded and its prediction, also called block of prediction residuals or prediction error signal, is then calculated. Another encoding step is a transformation of a block of residuals from the spatial (pixel) domain into a frequency domain. The transformation aims at reducing the correlation of the input block. Further encoding step is quantization of the transform coefficients. In this step the actual lossy (irreversible) compression takes place. Usually, the compressed transform coefficient values are further losslessly compressed by means of an entropy coding. In addition, side information necessary for reconstruction of the encoded video signal is encoded and provided together with the encoded video signal. This is for example information about the spatial and/or temporal prediction, amount of quantization, etc.

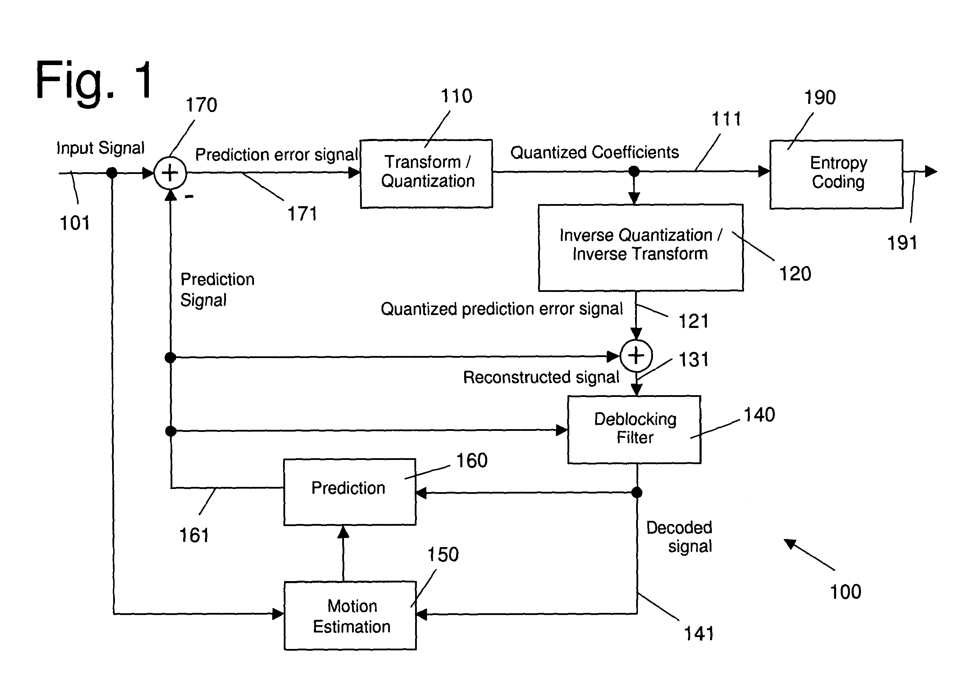

Figure 1 shows a simplified and generalized example of a typical H.264/MPEG-4 AVC standard compliant video encoder 100. The H.264/MPEG-4 AVC standard combines all above-mentioned encoding steps. A subtractor 170 first determines differences between a current block to be encoded of an input video image (input signal 101) and a corresponding prediction block 161, which is an estimation of the current block 101 to be encoded. In H.264/MPEG-4 AVC, the prediction signal 161 is obtained either by a temporal or by a spatial prediction 160. The type of prediction can be varied on a per macroblock basis. Macroblocks predicted using temporal prediction are called inter-encoded and macroblocks predicted using spatial prediction are called intra-encoded. The prediction signal 161 using temporal prediction is derived from blocks in the previously encoded images, which are stored in a memory. The prediction signal 161 using spatial prediction is derived from the values of boundary pixels of the neighboring blocks, which have been previously encoded, decoded, and stored in the memory. The difference 171 between the input signal 101 and the prediction signal 161, denoted prediction error or residual, is transformed resulting in transformation coefficients, which are further quantized 110. Entropy encoder 190 is then applied to the quantized coefficients 111 in order to further reduce the amount of data in a lossless way. This is mainly achieved by applying a code with code words of variable length wherein the length of a code word is chosen based on the probability of occurrence thereof.

Within the video encoder 100 of Figure 1, a decoding unit is incorporated for obtaining a decoded video signal 141. In compliance with the encoding steps, the decoding steps include inverse quantization and inverse transformation 120. The decoded prediction error signal 141 differs from the original prediction error signal 171 due to the quantization error, called also quantization noise. A reconstructed signal 131 is then obtained by adding 130 the decoded prediction error signal 121 to the prediction signal 161. In order to maintain the compatibility between the encoder side 100 and a typically independent target decoder side 200, the prediction signal 161 is obtained based on the encoded and subsequently decoded video signal 141, which (unlike the input signal 101) is known at both, the encoder 100 and the decoder 200 side. Due to the quantization 110, quantization noise is superposed to the input video signal 101 resulting in the noisy reconstructed video signal 131. Due to the block-wise coding, the superposed noise often has blocking characteristics, which may result in visible block boundaries in the decoded image. Such blocking artifacts have a negative effect upon human visual perception. In order to reduce these artifacts, a deblocking filter 140 is applied to the reconstructed image blocks 131. The video signal after deblocking is the decoded signal 141, which is to be displayed at the decoder side.

In order to be decoded, inter-encoded blocks require also the previously encoded and subsequently decoded image(s). Temporal prediction may be performed uni-directionally, i.e., using only video frames ordered in time before the current frame to be encoded, or bidirectionally, i.e., using also video frames following the current frame. Uni-directional temporal prediction results in inter-encoded images called P frames; bi-directional temporal prediction results in inter-encoded images called B frames. In general, an inter-encoded image may comprise any of P-, B-, or even 1-type macroblocks. An inter-encoded macroblock (P- or B- macroblock) is predicted by employing motion compensated prediction 160. First, a best-matching block is found for the current block within the previously encoded and decoded video frames by a motion estimator 150. The best-matching block then becomes a prediction signal 161 and the relative displacement (motion) between the current block 141 and its best match 161 is then signalized as motion data in the form of three-dimensional motion vectors within the side information further encoded 190 and provided together with the encoded video data 191. The three dimensions consist of two spatial dimensions and one temporal dimension (specification of the reference frame). In order to optimize the prediction accuracy, motion vectors may be determined with a spatial sub-pixel resolution e.g. half pixel or quarter pixel resolution. A motion vector with spatial sub-pixel resolution may point to a spatial position within an already decoded frame where no real pixel value is available, i.e. a sub-pixel position. Hence, spatial interpolation of such pixel values applied in order to perform motion compensated prediction.

For both, the intra- and the inter-encoding modes, the differences between the current input signal and the prediction signal are transformed and quantized by the unit 110, resulting in the quantized coefficients 111.

Generally, an orthogonal transformation such as a two-dimensional discrete cosine transformation (DCT) or an integer version thereof is employed since it reduces the correlation of the natural video images efficiently. After the transformation, lower frequency components are usually more important for image quality then high frequency components so that more bits can be spent for coding the low frequency components than the high frequency components. The two-dimensional matrix of quantized coefficients is then converted into a one-dimensional array. Typically, this conversion is performed by a so-called zig-zag scanning, which starts with the DC-coefficient in the upper left corner of the two-dimensional array and scans the two-dimensional array in a predetermined sequence ending with an AC coefficient in the lower right corner. As the energy is typically concentrated in the left upper part of the, two-dimensional matrix of coefficients, corresponding to the lower frequencies, the zig-zag scanning results in an array where usually the last values are zeros. This allows for efficient encoding using run-length codes as a part of/before the actual entropy coding. H.264/MPEG-4 AVC employs scalar quantization 110, which can be controlled by a quantization parameter (QP) and a customizable quantization matrix (QM).

The H.264/MPEG-4 AVC includes two functional layers, a Video Coding Layer (VCL) and a Network Abstraction Layer (NAL). The VCL provides the encoding functionality as briefly described above. The NAL encapsulates the encoded prediction error signal 111 together with the side information necessary for the decoding of video into standardized units, called NAL units, according to their further application such as transmission over a channel or storing in storage. There are VCL NAL units containing the compressed video data and the related information, as well as non-VCL units encapsulating additional data such as parameter set relating to an entire video sequence, or recently added Supplemental Enhancement Information (SEI)providing additional information that can be use to improve the decoding performance. The encapsulation of the coded information is performed according to syntax rules defined in the standard.

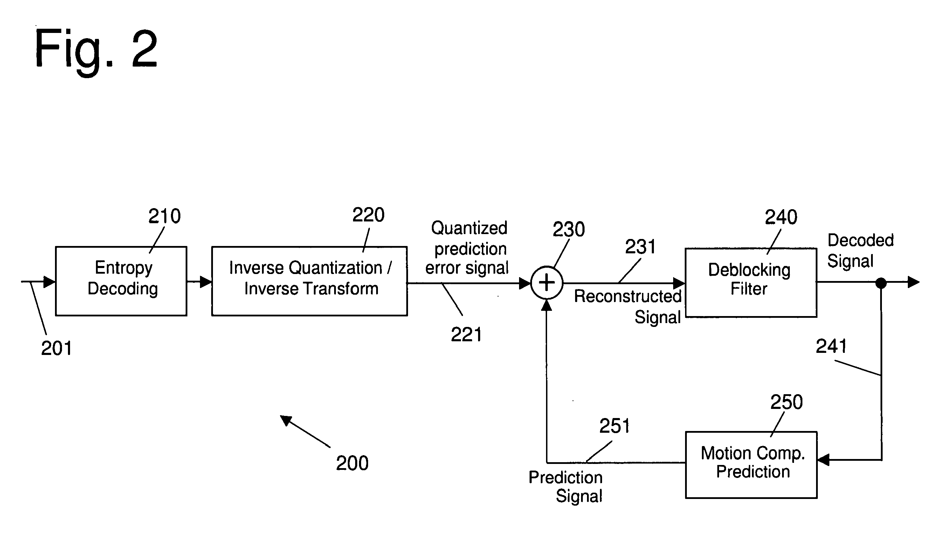

Figure 2 illustrates a simplified and generalized example decoder 200 compliant with the H.264/MPEG-4 AVC video coding standard. The bitstream comprising the encoded video data (input signal 201) and the side information elements, which are necessary for decoding such as motion data, mode of prediction etc., are parsed according to the syntax rules defined in the standard and decoded by the entropy decoder 210. Quantized coefficients parsed from the bitstream and decoded are inversely scanned in order to obtain a two-dimensional matrix, which is then fed to inverse quantization and inverse transformation 220. After inverse quantization and inverse transformation, a decoded (quantized) prediction error signal 221 is obtained, which corresponds to the differences obtained by subtracting the prediction signal 161 from the signal 101 input to the encoder in the case when no quantization noise is introduced.

The prediction signal 251 is obtained from predictor 250. In accordance with the side information parsed from the bitstream the spatial or temporal prediction 250 is applied. Depending on the current value of the motion vector, interpolation of pixel values may be needed in order to perform the motion compensated prediction. The quantized prediction error signal 221 in the spatial domain is then added by means of an adder 230 to the prediction signal 251 obtained either from the motion compensated prediction 250 or intraframe prediction 250. The reconstructed image may be passed through a deblocking filter 240 and the resulting decoded signal 241 is stored in the memory to be applied for temporal or spatial prediction of the following blocks. In order to improve the image quality, a so-called post filter may also be applied at the decoder side 200. The H.264/MPEG-4 AVC standard allows the sending of post filter information for setting-up such a post filter via the Supplemental Enhancement Information (SEI) message.

The quality of the encoded and reconstructed images or video sequences depends in general on the encoder settings. The transformation and quantization unit 110 is the portion of an encoder 100, responsible for the actual compression and thus, for the irreversible loss of information from the input image signal 101. In the following, the transformation and the quantization used in present H.264/MPEG-4 AVC is described in more detail.

H.264/MPEG-4 AVC applies block-wise two-dimensional separable integer DCT, being an approximation of the DCT. The block size of the transformation is adjustable on a per-macroblock basis to the size of either 4 x 4 or 8x8. The encoder 100 encodes and embedds the selected transformation block size into the coded video bitstream. The 4 x 4 integer DCT is performed according to the following equations:

$$\mathbf{C} = \left(\mathbf{T}_4 \cdot \mathbf{E} \cdot \mathbf{T}_4^T\right) \otimes \mathbf{S}_4,$$

$$\mathbf{T}_4 = \begin{bmatrix} 1 & 1 & 1 & 1 \\ 2 & 1 & -1 & -2 \\ 1 & -1 & -1 & 1 \\ 1 & -2 & 2 & -1 \end{bmatrix}, \mathbf{S}_4 = \begin{bmatrix} a^2 & ab/2 & a^2 & ab/2 \\ ab/2 & b^2/4 & ab/2 & b^2/4 \\ a^2 & ab/2 & a^2 & ab/2 \\ ab/2 & b^2/4 & ab/2 & b^2/4 \end{bmatrix}$$

Here, E denotes a matrix of 4 x 4 prediction error samples, $T_4$ is the 4 x 4 transformation matrix, and $S_4$ is a 4 x 4 matrix, which is used for a norm adjustment such that the resulting 4 x 4 transformation coefficient matrix C maintains the same energy as the 4 x 4 prediction error sample matrix E. The sign $\otimes$ indicates an element-wise multiplication rather than a matrix multiplication. Constants $a$ and b have values $a$ = 0.5 and $b = \sqrt{215}$

The 8 x 8 integer DCT is performed according to the following equations:

$$\mathbf{C} = \left(\mathbf{T}_8 \cdot \mathbf{E} \cdot \mathbf{T}_8^T\right) \otimes \mathbf{S}_8,$$

$$\mathbf{T}_8 = \frac{1}{8} \begin{bmatrix} 8 & 8 & 8 & 8 & 8 & 8 & 8 & 8 \\ 12 & 10 & 6 & 3 & -3 & -6 & -10 & -12 \\ 8 & 4 & -4 & -8 & -8 & -4 & 4 & 8 \\ 10 & -3 & -12 & -6 & 6 & 12 & 3 & -10 \\ 8 & -8 & -8 & 8 & 8 & -8 & -8 & 8 \\ 6 & -12 & 3 & 10 & -10 & -3 & 12 & -6 \\ 4 & -8 & 8 & -4 & -4 & 8 & -8 & 4 \\ 3 & -6 & 10 & -12 & 12 & -10 & 6 & -3 \end{bmatrix};$$

$$\mathbf{S}_8 = \begin{bmatrix} c^2 & ce & cd & ce & c^2 & ce & cd & ce \\ ce & e^2 & de & e^2 & ce & e^2 & de & e^2 \\ cd & de & d^2 & de & cd & de & d^2 & de \\ ce & e^2 & de & e^2 & ce & e^2 & de & e^2 \\ c^2 & ce & cd & ce & c^2 & ce & cd & ce \\ ce & e^2 & de & e^2 & ce & e^2 & de & e^2 \\ cd & de & d^2 & de & cd & de & d^2 & de \\ ce & e^2 & de & e^2 & ce & e^2 & de & e^2 \end{bmatrix}, \quad c = \frac{1}{\sqrt{8}}, \; d = \frac{1}{\sqrt{5}} \text{ and } e = \sqrt{\frac{32}{289}}$$

Here, E is a matrix of 8 x 8 prediction error samples, $T_8$ is the 8 x 8 transform matrix, and $S_8$ is an 8 x 8 matrix used for norming such that the resulting 8 x 8 transformation coefficient matrix C has the same energy as the 8 x 8 prediction error sample matrix E. The symbol $\otimes$ indicates an element-wise multiplication.

The transformation coefficient matrix C contains transformed prediction error samples, called transformation coefficients and denoted as $c_{i,j}$ with $i$ and $j$ being the row and the column indexes of a coefficient within the matrix.

In general, a quantizer is given by a sequence of representation values and decision thresholds between each two adjacent representation values. Representation values define the possible values that may be output by the quantizer. A decision threshold is used to decide to which of the two adjacent representation values the input sample is to be clipped. An interval between two adjacent decision thresholds is called quantization interval. An interval between two representation values is called quantization step.

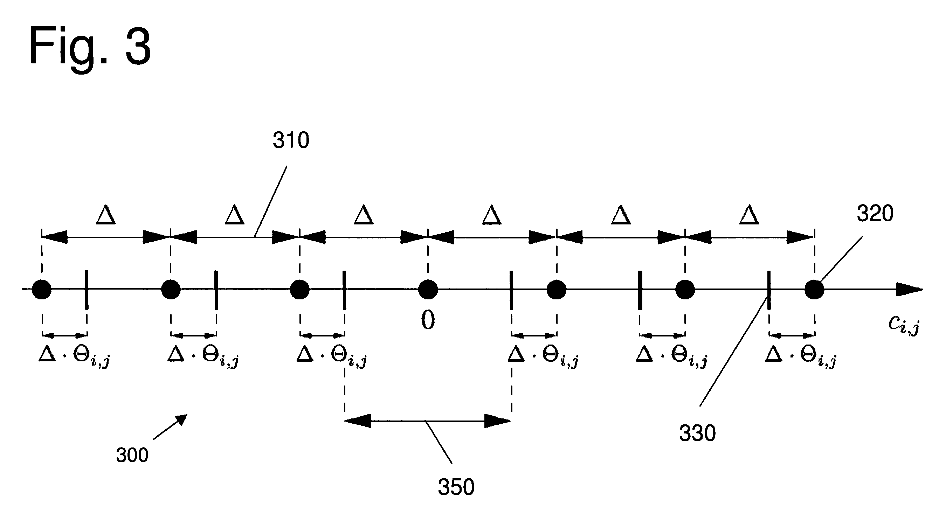

The H.264/MPEG-4 AVC standard defines only the representation values but not the decision thresholds. In the following, the decision thresholds as used in the H.264/MPEG-4 reference model will be referred to. In the H. 264/MPEG-4 reference model, each transformation coefficient $c_{i,j}$ is quantized using a quantizer 300 as illustrated in Figure 3.

The quantization step size 310 of the quantizer is $\Delta$, corresponding to a distance between two adjacent representation values 320 (black dots in Figure 3).

The position of the decision thresholds 330 (solid vertical lines in Figure 3) between the adjacent representation values 320 are adjusted using dead-zone parameters $\Theta_{i,j}$ The value of $\Theta_{i,j}$ is the same for all possible quantization steps of a coefficient $c_{i,j}$. The value of the $\Theta_{i,j}$ parameter also determines the size of the quantizer's dead zone 350.

Quantization of a transformation coefficient $c_{i,j}$ includes mapping of the transformation coefficient $c_{i,j}$ to a quantization interval identified by an index $sn_{i,j}$ according to the following equation:

$$sn_{i,j} = \left\lfloor \frac{|c_{i,j}|}{\Delta} + \Theta_{i,j} \right\rfloor \cdot \text{sign}(c_{i,j}), \qquad \text{sign}(k) = \begin{cases} -1 & ; & k < 0 \\ 1 & ; & k > 0 \\ 0 & ; & k = 0, \end{cases}$$

Inverse quantization includes obtaining the value of a quantized coefficient $c'_{i,j}$ given by a representation value calculated from the corresponding index $sn_{i,j}$ and the known quantization step size $\Delta$ according to the following equation:

$$c'_{i,j} = \Delta \cdot sn_{i,j}.$$

In order to adapt to changing image statistics, the dead-zone parameters $\Theta_{i,j}$ can be adjusted during the encoding. In the reference model of H.264/MPEG-4 AVC, the dead-zone parameters $\Theta_{i,j}$ are adjusted in such a manner that the following criterion is fulfilled:

$$E\left[ |c_{i,j}| \bigg| |c_{i,j}| > (1 - \Theta_{i,j}) \cdot \Delta \right] = E\left[ |c'_{i,j}| \bigg| |c'_{i,j}| > (1 - \Theta_{i,j}) \cdot \Delta \right]$$

Here, operator $E[x]$ denotes expectation of x. This criterion leads to a minimum mean square quantization error. In the reference model of H.264/MPEG-4 AVC, the dead-zone parameters $\Theta_{i,j}$ are initialized with $\Theta_{i,j} = \frac{1}{6}$ for inter-coding and with $\Theta_{i,j} = \frac{1}{3}$ for intra-coding. Moreover, the dead-zone parameters are continuously adapted after the quantization of a coefficient as follows:

$$\Theta_{i,j,neu} = \Theta_{i,j,alt} + 0{,}001 \cdot \frac{|c_{i,j}| - |c'_{i,j}|}{\Delta} \cdot \begin{cases} 1 & ; & c'_{i,i} \neq 0 \\ 0 & ; & \text{otherwise} \end{cases}$$

Here, $\Theta_{i,j,neu}$ represents the new value of the dead-zone parameter and $\Theta_{i,j,alt}$ represents the old value of the dead-zone parameter.

The quantization step size $\Delta$ is the same for all coefficients of a macroblock if no quantization weighting matrix is used. If quantization weighting matrices are used, the quantization step size $\Delta_{i,j}$ may be set for every single transformation coefficient $c_{i,j}$ of a macroblock. The quantization step size $\Delta$ can be adjusted individually for each macroblock by means of the quantization parameter (QP), which can take values between 0 and 51, defining thus 52 possible quantizers. The relation between the step size and the QP is as follows:

$$\Delta(QP) = \Delta_0(QP \bmod 6) \cdot 2^{\lfloor QP/6 \rfloor}, \qquad \Delta_0(k) = \frac{1}{16} \begin{cases} 10 & ; & k = 0 \\ 11 & ; & k = 1 \\ 13 & ; & k = 2 \\ 14 & ; & k = 3 \\ 16 & ; & k = 4 \\ 18 & ; & k = 5, \end{cases}$$

$$QP \in \{0, 1, \dots, 51\}.$$

Each transformation coefficient represents a single spatial frequency. The relationship between the frequency-independent quantization step $\Delta(QP)$ and the frequency-dependent quantization step $\Delta_{i,j}(QP)$ for a QP value is defined for each pair of transformation coefficient indexes $i, j$ by the quantization weighting matrix, also called Q-matrix, with elements $w_{i,j}$ Applying such a quantization weighting matrix results in frequency-dependent quantization step sizes of $\Delta_{i,j}(QP) = w_{i,j} \cdot \Delta(QP)$; the frequency-independent quantization step size $\Delta(QP)$ is scaled by a multiplication with the quantization weighting matrix. By the use of such a quantization weighting matrix, the frequency dependent sensitivity of the human visual system can be exploited. In particular, smaller quantization step sizes are typically used for lower frequencies and larger quantization step sizes are used for high frequencies.

Thus, in H.264/MPEG-4 AVC, quantization weighting matrices enable frequency dependent adjustment of the quantization step. The quantization weighting matrices may be signaled from the encoder to the decoder side. Furthermore, the quantization step may be varied depending on the content of the encoded image by setting the quantization parameter, which may be performed for each macroblock separately. This enables, for instance, encoding the more important parts of an image with a smaller quantization step and encoding less important parts of the image using larger quantization step. However, frequent signaling of the quantization related parameters such as quantization parameter introduces additional overhead to an encoded image or an encoded video sequence, which may lead to decreasing the overall coding efficiency. Moreover, the adjustment of the quantization step is limited to a region of an entire macroblock. Consequently, content variations within the macroblock cannot be taken into account.

SUMMARY OF THE INVENTION

The problem underlying the present invention is based on the observation that local adaptation of quantization related parameters may improve the quality of the reconstructed image considerably, however, on the other side requires an additional signaling overhead.

The aim of the present invention is to provide an encoding and decoding mechanism that provide an efficient adaptation of the quantization step size with regard to the content of the image.

This is achieved by the features as set forth in the independent claims.

Preferred embodiments are the subject matter of the dependent claims.

It is the particular approach of the present invention to set the quantization step size locally for an image area of an image according to the luminance of this area.

Such an approach provides adaptive quantization without any additional overhead, since the quantization step size may be determined in the same way at the encoder and at the decoder. Moreover, adapting the quantization step to the luminance of the image area enables exploiting of the luminance-dependent sensitivity of the human visual system.

According to an aspect of the present invention, a method for encoding an image signal is provided, the image including a plurality of image areas, each image area having at least one pixel. The method comprises the step of determining for an image area a quantization step size according to a luminance of the image area or its adjacent pixels; and the step of quantizing the image area with a quantizer applying the determined quantization step size.

According to another aspect of the present invention, a method for decoding an encoded image signal is provided, the image including a plurality of image areas, each image area having at least one pixel. The decoding method comprises the step of determining for an image area a quantization step size according to a luminance of the image area or its adjacent pixels and the step of inverse quantizing the image area with an inverse quantizer using the determined quantization step size.

According to still another aspect of the present invention, an encoder is provided for encoding an image signal including a plurality of image areas, each image area having at least one pixel. The encoder comprises a quantization adjustment unit for determining for an image area a quantization step size according to a luminance of the image area or its neighbourhood and a quantizer for quantizing the image area using the determined quantization step size.

According to yet another aspect of the present invention, a decoder is provided for decoding an encoded image signal including a plurality of image areas, each image area having at least one pixel. The decoder comprises a quantization adjustment unit for determining for an image area a quantization step size according to a luminance of the image area or its neighbourhood and an inverse quantizer for inverse quantizing the image area using the determined quantization step size.

In particular, the determination of the quantizition step size and/or the quantization or inverse quantization may be performed for each of the plurality of the image areas. However, the present invention is not limited thereto and in general, the quantization step size adjustment may be performed only for some of the image areas.

The present invention is applicable for encoding and decoding of still images as well as for encoding and decoding of video sequences according to any compression mechanism which employs quantization. It is also applicable for block-based image and video compression mechanisms. In such a case, preferably, the image areas correspond to blocks of the image signal. The blocks may have size of the blocks used for transformation in case transformation coding is applied. Transformation coding includes transforming the image signal (image area) into transform coefficients using a transformation such as, for instance (integer) discrete cosine transformation, fast Fourier transformation, Karhunen-Loève transformation or any other transformation.

However, the present invention may also be applied for quantizing of a non-transformed image signal values such as input image samples of prediction error samples. The image areas may in general have a form different from the form of a block. It may be, for instance, advantageous to pre-segment the image to image areas, each having a substantially similar luminance values and to adapt quantization step size for these image areas locally and separately. Other segmentation such as object based segmentation may be applied as well for obtaining the image areas. The segmentation may also consider different regions of interest in the image and adapt the quantization in a different way for each of them.

The neighbourhood of the image area may be the spatial or the temporal neighbourhood. In particular, for estimating the luminance of the image area, the pixels adjacent to the image area in the same image may be used. Alternatively, or in addition, pixels of from previous or future (reference) images may be used to estimate the luminance of the image area. The temporally adjacent pixels in the reference images are preferably in the same or motion compensated position as the image area within the current image. Alternatively, the pixels of the image area are estimated by a prediction signal. The prediction may be temporal or spatial or hybrid prediction

Based on the luminance of the image area, for instance, estimated as described above a local mean luminance value is preferably calculated as a mean of the prediction signal and/or as a mean of the adjacent pixels. The quantization step for quantizing the image area is then determined based on the calculated local mean luminance value. Estimating of the luminance of the image area rather than taking directly the luminance values to be encoded enables performing the quantization step adjustment in the same way at the encoder and at the decoder, since it is only based on information (such as prediction signal and/or already encoded/decoded adjacent pixels) available at both the encoder side and the decoder side. However, the present invention is not limited to the local mean measure of luminance. Alternatively, another measures based on the luminance values of the image area such as luminance values of prediction signal or luminance values of the adjacent pixels may be used. For instance, instead of a mean, the highest or the lowest luminance values can be taken. In some cases, median or any percentile may provide an advantage over a simple mean. The mean may be weighted. Other norms or metrics may be applied similarly.

In order to ensure a more exact setting of the quantization step size, the local luminance of the image area may be used at the encoder directly for the determining of the quantization step size and at the same time an estimated quantization step size may be determined based on a local mean luminance as described above. The difference between the two quantization step sizes (one based on knowledge of the luminance of the image area and the other one estimated from the image prediction signal and/or adjacent pixels) may then be encoded and signalled to the decoder side. Due to such predictive coding, the overhead for signalling of these differences may still be lower than the overhead needed for signalling of the quantization step size directly.

Preferably, the quantization step size is determined in accordance with a predefined rule. In particular, the rule specifies a relation between the luminance and the quantization step size. For instance, for an estimated (local mean) luminance the rule provides a quantization step to be applied so that the resulting quantization noise remains unnoticeable for a human. Such a rule is in general based on Weber-Fechner law demonstrating luminance-dependent sensitivity of a human eye. Such a rule may be fixedly defined in a standard, or in an implementation of an encoder and/or decoder.

Preferably, the rule is embedded within the bitstream of the encoded video signal and can be selected for an image or a video sequence. The rule may also be signalized for a picture in a video sequence, or for slices or other parts on an image. The possibility of signalling the rule enables adapting of the quantization to the application and considering, for instance, the target viewing devices and/or viewing conditions and/or the other features of the viewed content.

The quantization step size may be determined as a sum of a predefined target quantization step size ($\Delta$) which is independent of luminance and a quantization step offset ($\delta(Y)$) determined based on luminance of the image area or its adjacent pixels. In addition, the quantization step may be scaled individually for different frequency components.

In addition to setting of the quantization step size, the decision threshold positions and dead-zone may be adjusted in according with the adjusted quantization step size. Such an adaption is advantageous in particular for sources with a Laplacian distribution.

In accordance with another aspect of the present invention, a computer program product comprising a computer-readable medium having a computer-readable program code embodied thereon is provided, the program code being adapted to carry out the present invention.

In accordance with yet another aspect of the present invention, a system for transferring a video signal from an encoder side to a decoder side is provided, comprising an encoder as described above, a channel for storing or transmitting the encoded video signal, and a decoder as described above. In accordance with an embodiment of the present invention, the channel corresponds to the storing medium, for instance, a volatile or a non-volatile memory, an optic or a magnetic storing medium such as CD, DVD, BD or a hard disc, a Flash memory or any other storing means. In another embodiment of the present invention, the channel is a transmission medium, which can be formed by resources of a wireless or a wired system, or any combination of both in accordance with any standardized or proprietary transmission technology/system such as Internet, WLAN, UMTS, ISDN, xDSL, etc.

Preferably, the system comprises an encoder side and a decoder side with an encoder and a decoder, respectively, according to the present invention, wherein the determination of the quantization step size is performed in the same way at the encoder and at the decoder, namely, for an image area based on the luminance of the image area estimated from the prediction signal of the image area and/or from the adjacent pixels. The quantization adjustment information according to which the quantization step size is determined based on the estimated luminance, may be signalized from the encoder to the decoder.

The above and other objects and features of the present invention will become more apparent from the following description and preferred embodiments given in conjunction with the accompanying drawings in which:

Figure 1    is a block diagram of a conventional H.264/MPEG-4 AVC video encoder;

Figure 2    is a block diagram of a conventional H.264/MPEG-4 AVC video decoder;

Figure 3    is a schematic drawing illustrating a quantizer of an H.264/MPEG-4 AVC reference model;

Figure 4    is a graph illustrating an example relation between the luminance value and the threshold of visibility measured by means of the variance of the quantization error variance;

Figure 5    is a schematic drawing illustrating a set-up for measuring a luminance dependent visibility threshold;

Figure 6    is a graph illustrating the results of measurements using set-up of Figure 5 with and without background noise;

Figure 7    is a schematic drawing illustrating a uniform quantizer controllable in accordance with the present invention;

Figure 8    is a graph illustrating a relation between the luminance level and the step size offset $\delta(Y)$, the adding of which leads to a non-visible additional quantization noise, in accordance with the measurements according to Figures 5 and 6;

Figure 9    is a graph illustrating a relation between the luminance level and the step size offset $\delta(Y)$, the adding of which leads to a non-visible additional quantization noise;

Figure 10    is a schematic drawing illustrating the adjustment of the quantizer according to the present invention;

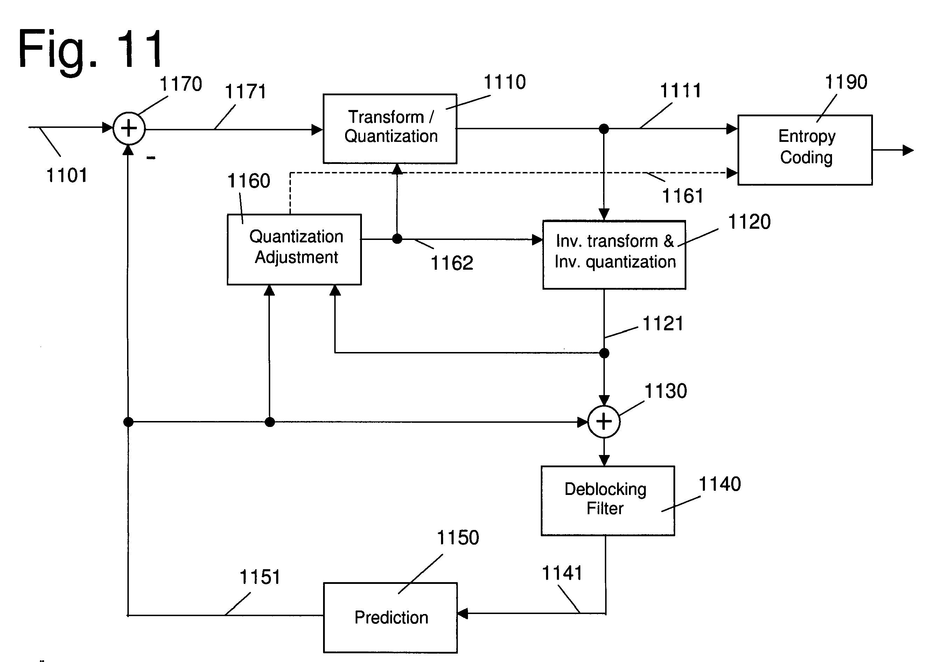

Figure 11    is a block diagram of an example H.264/MPEG-4 AVC encoder adapted in accordance with the present invention;

Figure 12    is a block diagram of an example H.264/MPEG-4 AVC decoder adapted in accordance with the present invention;

Figure 13    is a schematic drawing illustrating a quantization of the quantization adjustment parameter curve for encoding;

Figure 14    is a schematic drawing illustrating an interpolation of the quantized quantization adjustment parameter curve;

Figure 15    is a schematic drawing of a system with an encoder and a decoder in accordance with the present invention;

Figure 16    is an illustration of a recording medium for storing a program realizing any of the embodiments of the present invention by means of a computer system;

Figure 17    is a block diagram showing an overall configuration of a content supply system for realizing content distribution service using coding and decoding approach of the present invention;

Figure 18    is a schematic drawing showing a cell phone for using the picture coding approach of the present invention;

Figure 19    is a block diagram illustrating the functional blocks of the cell phone exemplified in Figure 18; and

Figure 20    is illustrating a wireless digital system for incorporating the coding and decoding approach of the present invention.

## DETAILED DESCRIPTION

The present invention provides a method for encoding, a method for decoding, an apparatus for encoding and an apparatus for decoding a video signal. At the encoder side as well as at the decoder side, a quantization step size is determined for a local region of an image based on its luminance and/or the luminance of the neighbouring pixels. The local determination enables adaptive quantization depending on the image content. Employing the luminance of the image area and/or the neighbouring pixels for controlling the quantization step size further enables performing the control in the same way at the encoder and at the decoder without need for further signalling.

In accordance with the present invention, the quantization step size used for encoding and/or decoding the video signal is determined and applied locally based on a luminance of the particular image area to be quantized.

In the context of block-based coding in accordance with a preferred embodiment of the present invention, for each block, a local mean luminance of the block is used to adjust the quantization step size in accordance with the Weber-Fechner law specifying the sensitivity of the human visual system to different levels of luminance. Weber-Fechner quantization adjustment parameters which are necessary for the decoder to know how to change the quantization step sizes for a certain luminance level may be coded and transmitted in the bitstream or fixedly set in the same way at the encoder and the decoder.

The encoder control algorithm may also adapt the decision thresholds between adjacent representation values of the quantizer to the adjusted quantization step sizes.

In this way, the present invention provides content adaptive quantization. The quantization step size is adjusted based on local luminance signal, which is available at both encoder and decoder side. This allows implicit setting of the quatization step in the same way at the encoder side and at the decoder side. Consequently, no explicit signaling of quantization related parameters or their changes is required. This enables reducing the data rate while maintaining the same perceptual quality.

Another disadvantage of the quantization step adaptation of H.264/MPEG-4 AVC is that the adaptation can only be performed per macroblock, which is rather coarse especially in case of images with lower resolutions. There is no possibility to adapt the quantization step for blocks smaller than a macroblock such as subblocks used for transformation and/or prediction, or even smaller parts of the image. This disadvantage may also be overcome by the present invention. The implicit setting of the quantization step based on the local luminance signal allows adaptation even within a single macroblock.

Such an adaption may be advantageously performed in accordance with the characteristics of the human visual system in order to increase the perceptual quality of the reconstructed image or video. Beside this frequency dependent sensitivity, the human visual system has also a luminance dependent sensitivity. The Weber-Fechner law of experimental psychology summarizes the finding that the human capacity to distinguish a change in magnitude of a stimulus depends on the current magnitude of that stimulus. This means in terms of image perception that when displaying neighbouring pixels differing in intensity less that a threshold *T*, the most human observers will not be able to distinguish this difference. The threshold T is often referred to as the Just Noticeable Distortion (JND). The value of this threshold *T* and thus the sensitivity of the human eye depends in accordance with the Weber-Fechner law on the absolute luminance. The human eye is most sensitive in the mid-grey areas and less sensitive in very dark and very bright areas.

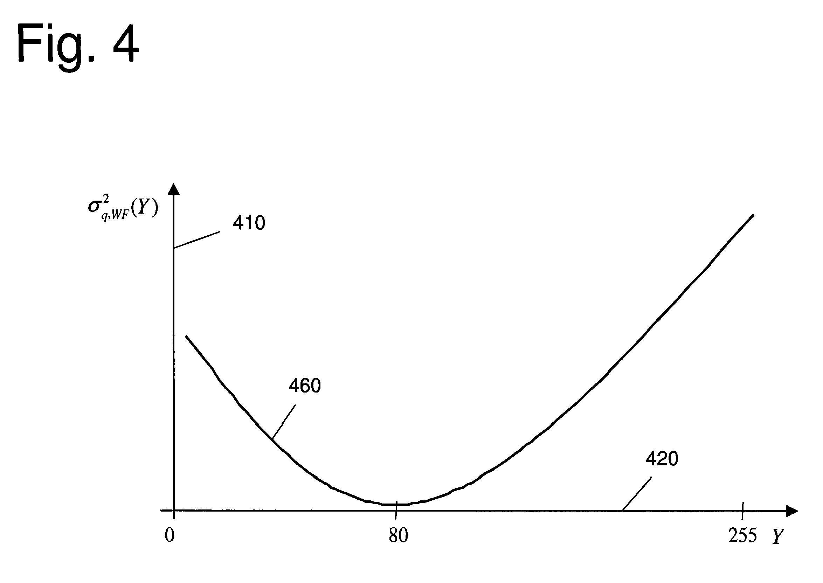

Figure 4 shows an example curve 460 illustrating a relation between the value 420 of luminance *Y and* the visibility threshold 410 of a quantization error with a quantization error variance $\sigma^2_{q,WF}(Y)$. Quantization error is measured as a difference between the signal input to the quantizer and its output. From the curve 460 it can be seen that the human visual system is less sensitive in very dark areas of a picture which are associated with small luminance values and also in very bright areas of a picture which are associated with large luminance values. Thus, in these areas, the quantization noise may be quite large being still invisible to the most of the human observers. The human visual system is most sensitive in areas of middle brightness which are associated with mid-range luminance values around 80 in the case of 8 bit Pulse Code Modulation (PCM). In these areas, the quantization noise has to be relatively small in order to remain invisible.

The curve 460 illustrated in Figure 4 is only an example curve. Such a curve may provide a guideline on how to adapt the quantization step for encoding a portion of an image in accordance with its luminance. However, in general, the exact shape of such a curve depends on several factors such as the features of the viewing device, viewed image and viewing conditions. It may also slightly differ for individual observers due to possible differences in their visual systems.

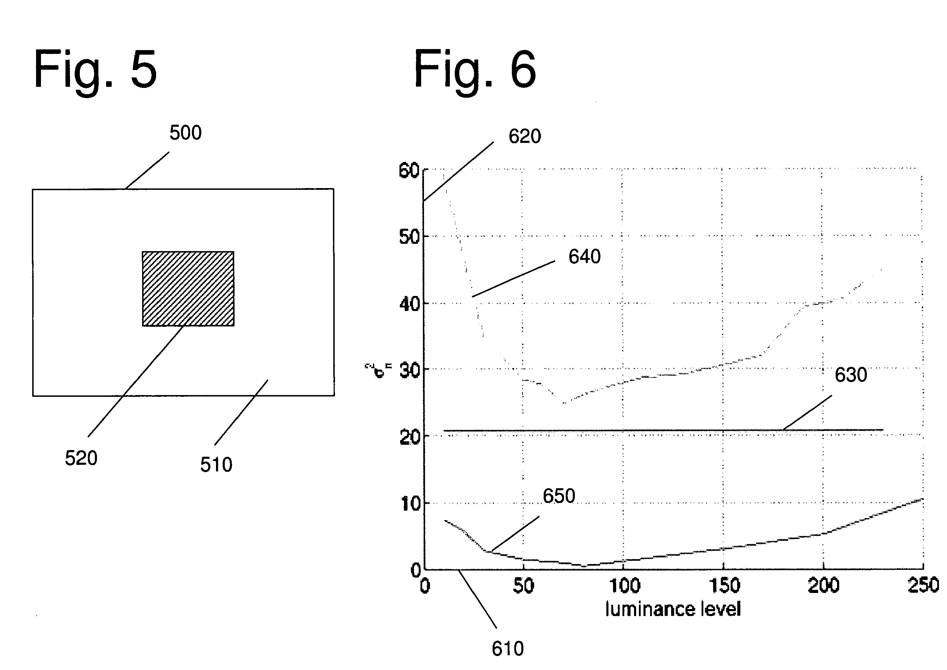

Figure 5 shows an example set-up for measuring the luminance dependent visibility threshold $\sigma^2_{q,WF}(Y)$ , represented by the variance of the quantization error. The measurement set-up comprises test image 500 with a background portion 510 having a background luminance signal *Y*, superposed with a background *noise q$_b$* of a variance $\sigma^2_{qb}$.

The test image 500 further comprises a foreground portion 520 having the same background luminance signal *Y* and a noise signal q with variance $\sigma^2_q$ superposed thereto. The foreground portion is positioned essentially in the center of the test image 500. For a measurement of the luminance dependent visibility threshold, a set of test images such as 500 is to be used with different values of background portion 510 luminance *Y and* with different foreground portion 520 noise variance $\sigma^2_q$. During the measurement, the test images are shown to each of a plurality of human observers and for each luminance level *Y,* the maximum variance $\sigma^2_{q,WF}$ of quantization noise is determined, which is still not noticeable (imperceptible) to the observer. The results obtained from the plurality of observers may then be further statistically processed in order to obtain the desired curve representing luminance dependent visibility threshold.

The above described set-up is only an example set-up. The test images may be prepared differently, the shape and position of the foreground portion 520 may be varied in accordance with the desired application of the results. It may be also beneficial to perform measurements for different viewing devices and under different viewing conditions. The resolution of the image may also be varied. In order to reduce the burden of performing the measurements, the measurements may be performed only for several selected background luminance values Y rather than for each single value. The missing (not measured) values may be interpolated. The test images with various distributions of the background noise and or quantization noise may be tested.

Figure 6 shows a graph illustrating the relation between the luminance level 610 and the visibility threshold 620 measured as the maximum imperceptible quantization noise variance (similar to the minimum just noticeable quantization noise variance). Two visibility threshold curves 640 and 650 are presented. These curves were obtained using a set-up as described with reference to Figure 5. The bottom curve 650 represents a result of measurements in which the variance of the background noise has been set to zero, i.e., no background noise was present and the background portion 510 of the test image 500 consisted of a uniform luminance level Y. The foreground portion 520 included the luminance level *Y* and the quantization noise q superposed thereon resulting in image signal *Y+q.* It can be seen that the overall shape of the measured curve 650 is similar to that of the curve 460 of Figure 4. In addition, for measuring the influence of the background noise on the luminance dependent visibility threshold, the measurement has also been performed with presence of the non-zero background noise with variance $\sigma^2_{qb.}$ The background portion thus included an image signal with luminance *Y+q$_b$*. The middle curve 630 illustrates the background noise variance $\sigma^2_{qb}$ applied for this measurement for different luminance values Y. The result of this measurement can be seen in Figure 6 as the top curve 640, which has also shape essentially similar to the curve 460 of Figure 4.

The comparison of the curve 650 measured without background noise and the curve 640 measured with background noise shows that the variance $\sigma^2_{q,WF}$ of the quantization noise, which can be added without being noticeable to the human eye depends on the already present (quantization) noise in the background luminance signal $\sigma^2_{qb}$. If the background luminance signal has no quantization noise, then the quantization noise which can be added without becoming visible is rather small. If the same background luminance signal already contains some quantization noise, then the quantization noise, which can be added without becoming visible is larger.

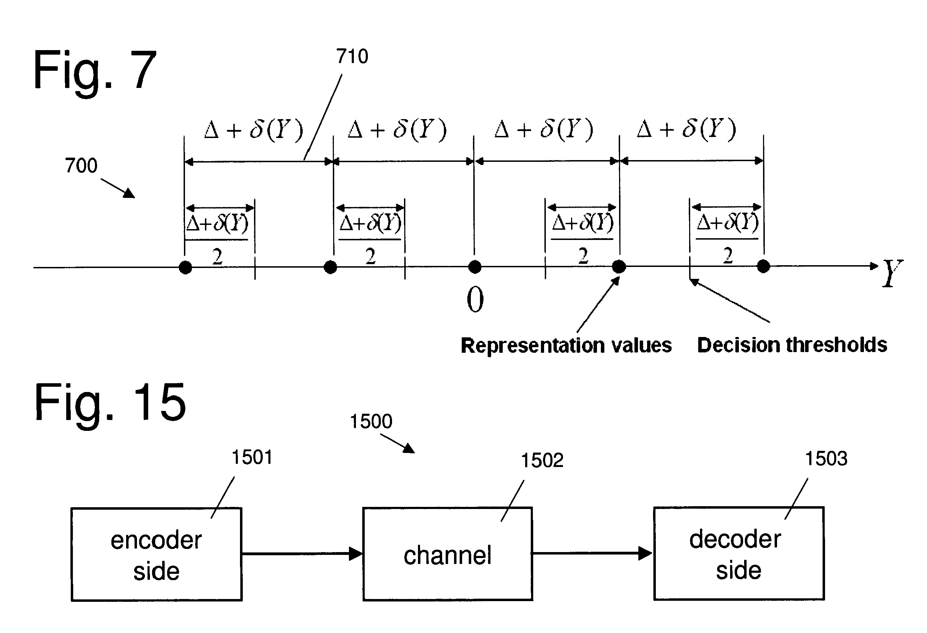

This result may also be advantageously used for controlling the quantization step in accordance with the present invention. Now, a uniform quantizer 700 is assumed as shown in Figure 7 and a uniformly distributed quantization noise. The step size of a quantizer assumed to produce the background noise $q_b$ with variance $\sigma^2_{qb}$ is $\Delta$. This is comparable to the step size $\Delta$ of the H.264/MPEG-4 AVC quantizer 300 described with reference to Figure 3. The step size 710 of a quantizer producing the noise q being just not noticeable is $\Delta + \delta(Y)$. The just not perceptible noise has the variance $\sigma^2_{q,WF}$ Based on the variance $\sigma^2_{q,WF}$ of the just (not) noticeable noise and the background noise variance $\sigma^2_{qb}$, the luminance dependent step size increase $\delta(Y)$, which leads to a non-visible additional quantization noise, may be calculated as follows:

$$\Delta = \sqrt{12 \cdot \sigma^2_{qb}} \; ,$$

$$\Delta + \delta(Y) = \sqrt{12 \cdot \sigma^2_{q,WF}(Y)} \; ,$$

$$\delta(Y) = \sqrt{12 \cdot \sigma^2_{q,WF}(Y)} - \sqrt{12 \cdot \sigma^2_{qb}} \; .$$

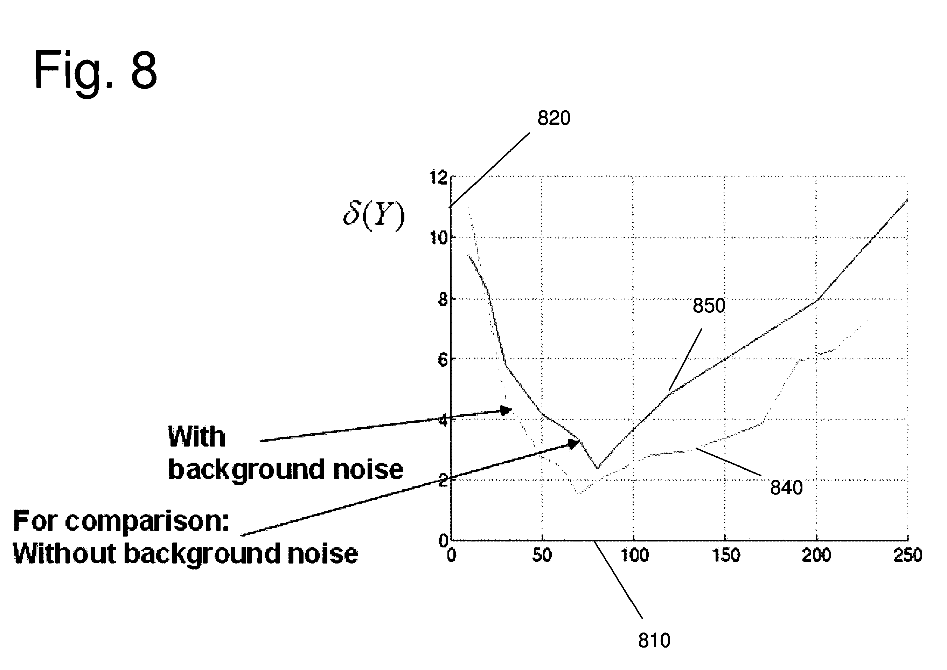

Figure 8 shows a relation between the luminance level 810 and the step size increase $\delta(Y)$, which leads to a non-visible additional quantization noise, as curves 840 and 850 calculated based on the measured curves 640 (taking into account background noise) and 650 (with a zero-value background noise), respectively. As can be seen from Figure 8, $\delta(Y)$ is approximately the same for the both cases.

The results of the above described experiments indicate that a quantizer which exploits the Weber-Fechner law needs to have the possibility of increasing the step size in an additive way, which means $\Delta_{i,j}(QP) + \delta(Y)$. As already described above, the quantization weighting matrices of H.264/MPEG-4 AVC are applied multiplicatively. Thus, in accordance with an embodiment of the present invention, a luminance dependent offset is added to a predefined step size. The predefined step size is typically given by the quantization parameter, which is, in turn, determined by the desired target data rate. After adding the luminance dependent offset, the step size may be further scaled by an individual multiplicative factor for each coefficient as defined in the quantization matrix.

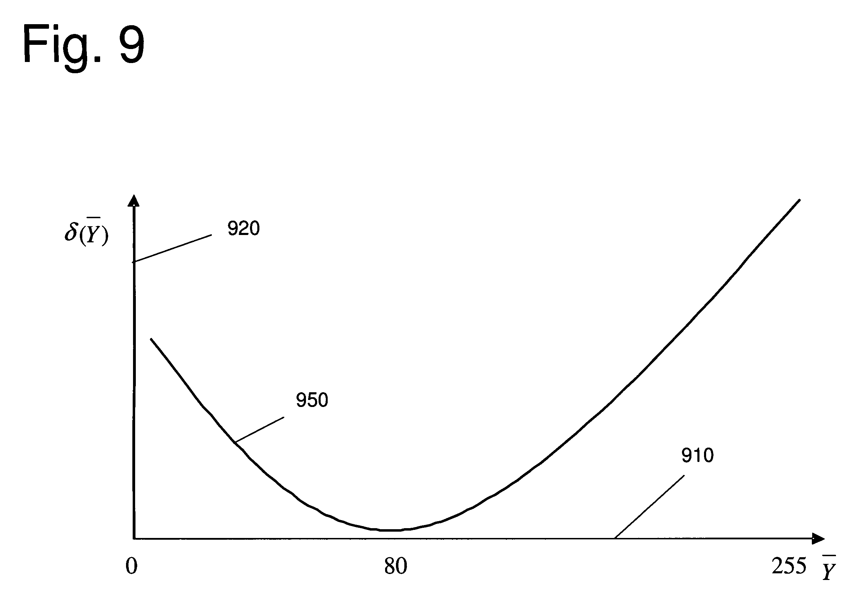

According to this embodiment of the present invention, the quantization step sizes are adjusted according to a rule. Such a rule may be, in particular, a curve or a table which assigns a quantization step size change (offset) parameter $\delta(Y)$ to each local mean luminance value $Y$. Figure 9 illustrates a graph with such a curve 950, which specifies the dependency of the quantization step size change parameter $\delta(\overline{Y})$ with respect to a local mean luminance value $Y$ for the case of 8-bit PCM, which means that values of $Y$ and consequently also $Y$ are from the interval [0;255]. Adjusting the step size according to a local luminance has an advantage of local adaptation of the quantizer to the image content. For the local adaptation of the quantization step, at first, the local mean luminance value of the local region, the quantization step of which is to be set, needs to be determined. In context of a block-wise encoding and decoding, such a local region may be a macroblock, or a block. However other sizes and forms of the local image region may be used as well. Advantageously, the quantization step size is adapted separately for the DC transformation coefficients and for the AC transformation coefficients. In particular, in order to adjust the quantization step size for a DC value of a block of prediction error coefficients, the mean luminance value $\overline{Y}$ of the corresponding prediction signal, preferably at the same spatial (block within the image) and temporal (image within the sequence) position, is calculated. In general, the range of the luminance mean value may differ from the range of the curve 950 of Figure 9 used for determining the quantization step

adjustment parameter $\delta(\overline{Y})$. For instance, the luminance may be a value between 1 and 256, while the curve 950 is available for luminance values in the range 1 to 1024 or vice versa (of course, other ranges may apply). In such a case, the calculated mean value may be further mapped on the range of the curve.

The quantization step size change parameter $\delta(\overline{Y})$ is then determined based on the calculated mean luminance value $\overline{Y}$ in accordance with the curve 950 of Figure 9. Then, the quantization step size $w_{i,j} \Delta_{i,j} (QP) + \delta(\overline{Y})$ is used for the quantization and/or the inverse quantization at the encoder side and the decoder side, respectively. Such a setting of the quantization step has the advantage of being equally applicable at the encoder and at the decoder since for the determination of the quantization step an information is used, that is available to both the encoder and the decoder. In particular, the rule given in this embodiment by the curve 950 of Figure 9 has to be known to both, the encoder and the decoder. This may be achieved either by pre-setting such a rule in the same way at the encoder and at the decoder, such a rule may be a part of an image/video coding specification, or it may be set at the encoder and signalized to the decoder within the encoded bitstream.

The quantization step size for the AC values of a block of prediction error coefficients may also be adjusted according to the local mean luminance value of the corresponding prediction signal, preferably at the same spatial and temporal position. This calculated mean value may be further mapped on the value range of the curve 950, if the value ranges of the curve and the means differ. In addition, the DC value quantized and inverse-quantized (preferably using the already adjusted step size) is inverse-transformed and added to the mean luminance value of the prediction signal. This sum reflects the correct local mean luminance value $\overline{Y}$. Based on the calculated local mean luminance value, the quantization step is adjusted as described above.

The adjustment of quantization step described so far includes an offset set in accordance with the present invention and the multiplication factor set in accordance with the quantization weighting matrix. However, the offset of the embodiment of the present invention is also applicable without using the adjustment by quantization weighting matrices. Moreover, it is also possible to only adapt the quantization step of the AC coefficients. The DC coefficients may be quantized by the non-adjusted quantization step $\Delta(QP)$. Assuming that the offset-adjustment of the present invention increases the quantization step, it may be desirable to maintain DC values quantized finer and thus not to apply the adjustment of the present invention. The quantization step size for AC coefficients could be calculated in the same way as described above. However, the adjustment of the quantization step may be performed for DC coefficients only.

The present invention, however is not limited to estimating the local luminance value for an image area as a local mean luminance calculated from the prediction signal. The local luminance may also be estimated using luminance values adjacent to the image area temporally an/or spatially. Advantageously, the already encoded (decoded) luminance values are used for the estimation. The luminance may also be estimated by combining of the previously described approaches.

Alternatively, the local luminance of the image area does not necessarily have to be predicted. It may be used at the encoder directly for the determining of the quantization step size. However, the decoder when decoding does not have the knowledge of these luminance values. Thus, at the same time an estimated quantization step size may be determined based on a local mean luminance as described above at the encoder side. The difference between the quantization step size obtained based on the knowledge of the luminance of the image area and the quantization step size estimated from the image prediction signal and/or adjacent pixels may then be calculated. The calculated quantization step size difference may further be encoded and signalled to the decoder side. With this information and based on the estimated quantization step size determined from the prediction signal and/or adjacent pixels, the decoder will be able to recover the quantization step size as calculated at the encoder side. Due to such predictive coding, the overhead for signalling of these differences may still be lower than the overhead needed for signalling of the quantization step size directly.

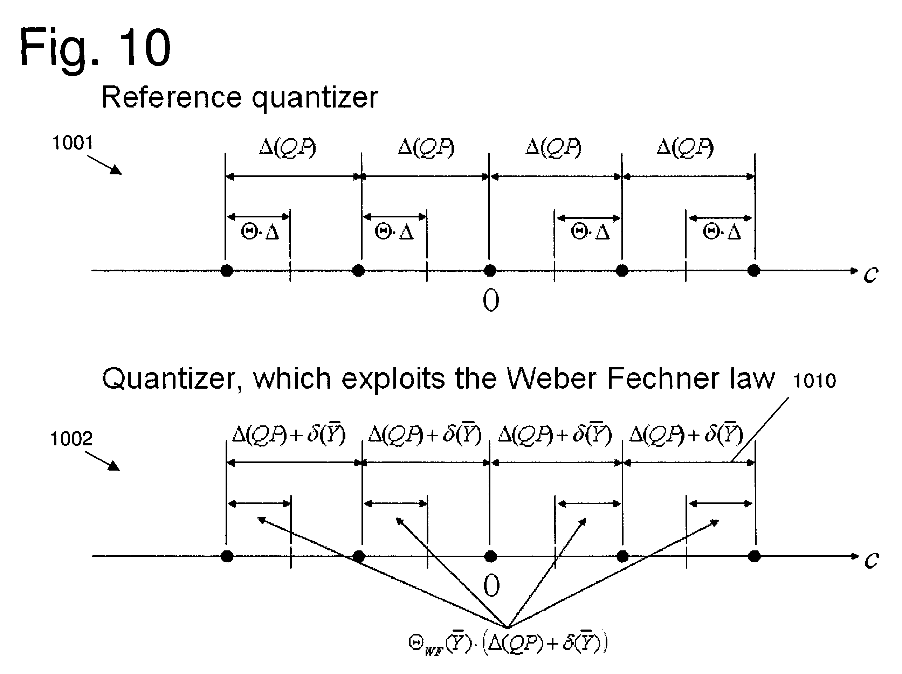

Figure 10 illustrates an example quantizer 1002 in accordance with this embodiment of the present invention compared to the quantizer 1001 of the H.264/MPEG-4 AVC reference model. It visualizes how the quantization step size is adjusted using the quantization step size offset parameter $\delta(\overline{Y})$. The reference model quantization step size is denoted as $\Delta$.

However, it could also be denoted $\Delta_{i,j}$ in the case of individual step sizes for each coefficient. It could also be $w_{i,j} \Delta_{i,j}$ in the case that quantization weighting matrixes $w_{i,j}$ are used. Since $\Delta$ depends on the quantization parameter value, it may vary within a picture/slice/sequence, thus a very general expression of the step size is $w_{i,j} \Delta_{i,j} (QP) + \delta(\overline{Y})$. The quantization step size change parameter $\delta(\overline{Y})$ is preferably added to the pre-set step size defining the background noise variance.

Figure 9 illustrates an example of an implementation of the present invention into the conventional H.264/MPEG-4 AVC encoder 100 of Figure 1. In particular, the input signal 1101 is predicted 1150 by a prediction signal 1151 and the difference 1170 between them is input to the transformation and quantization unit 1110. In the quantization adjustment unit 1160, the local mean luminance values are determined for each block, preferably having the size equal to the size of the transformation, based on the prediction signal 1151 and based on the inverse quantized and inverse transformed DC coefficient of the quantized prediction error signal 1121. Based on the calculated local mean luminance values, the step size $1162_{[ON1]}$ is adjusted and provided to the quantizer 1110 and the inverse quantizer 1120, the quantization step sizes for DC and AC coefficients of the image blocks are adjusted locally.

This adjustment is performed based on a pre-defined rule. For defining this rule, quantization adjustment parameters 1161 are necessary. The quantization adjustment parameters 1161 may be determined by the encoder 1100 or set by a user at the encoder side, encoded 1190, and embedded within the bitstream transmitted to the decoder 1200 side. Alternatively, the quantization adjustment parameters 1161 may be fixedly set, for instance by a standard. Advantageously, these quantization adjustment parameters 1161 are coded and transmitted once per sequence, once per slice, or once per frame. It may be useful to code and transmit them once per block or for a group of blocks, for instance, forming different regions of interests of an image. The quantization adjustment parameters 1161 may also be sent irregularly within the bitstream in a separated message, for instance, upon the change of image/video content. The quantization adjustment parameters 1161 may directly include a specification of the relation between luminance values and the quantization step offset such as the curve 950 of Figure 9, for instance, in a form of a vector of values. Alternatively, it may contain an indicator specifying one of a plurality of such fixedly pre-defined or already transmitted curves. Based on the step sizes 1162, the quantizer 1110 and the inverse quantizer 1120 apply the adjusted quantization step size, which may be further adjusted, for instance, by applying the quantization weighting matrixes. the video signal 1141 is reconstructed 1130 and after deblocking filtering 1140 provided to the prediction unit 1150.

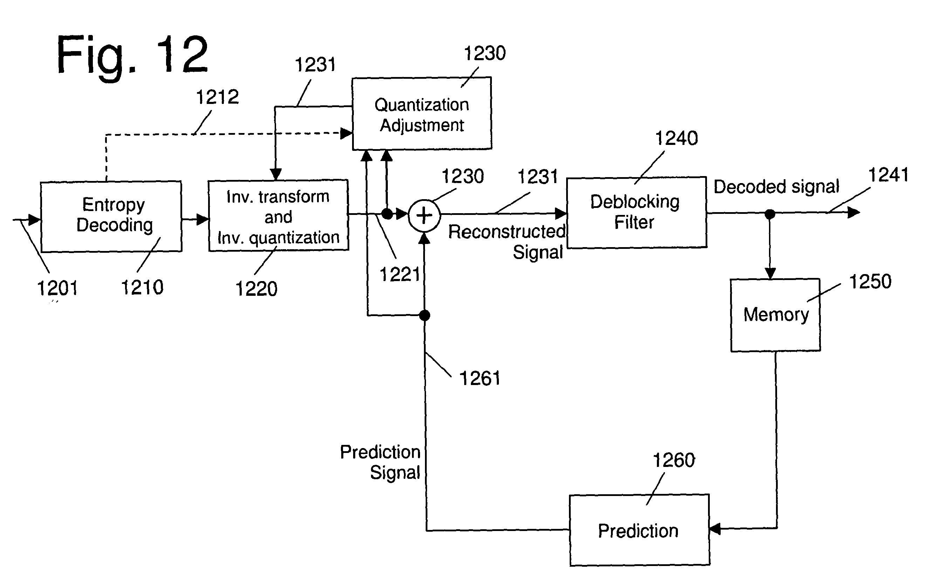

Figure 12 illustrates an example implementation of the present invention into an H.264/MPEG-4 AVC decoder 1200. The entropy decoder 1210 receives the encoded bitstream 1201 possibly including the quatization adjustment parameters. The entropy decoder decodes the information elements relating to video decoding and possibly the signaled quantization adjustment parameters 1212 and passes them to the quantization adjustment unit 1230. The quantization adjustment unit sets up a rule according to the decoded quantization adjustment parameters 1212 or according to a fixed predefined rule, if available. Furthermore, it determines local mean luminance values based on the prediction signal 1261 obtained by a predictor 1260 (spatial or temporal) and based on the inverse quantized and inverse transformed DC coefficient of the quantized prediction error signal 1221. Based on the calculated local mean luminance values and the rule, the quantization step sizes 1231 are adjusted locally by the quantitazion adjustment unit 1230 and provided to the inverse quantizer 1220. The inverse quantized and inverse transformed signal 1221 is reconstructed 1230 by adding thereto the prediction signal 1261 and provided to the deblocking filter 1240. Memory 1250 stores already decoded image parts to be used by the predictor 1260. The deblocked signal 1241 may be output for displaying or further filtered, for instance, by a post filter.

According to this implementation of the present invention into the H.264/MPEG-4 H.264/MPEG-4 AVC, the adjustment of the quantization step size is performed for each single block of quantized prediction error coefficients. This means that the granularity of local luminance dependent adaptation of the quantization step size equals the block sizes used for the transformation coding of the prediction error. Typically, block sizes of 4x4, 8x4, 4x8, 16x16, etc. are used. Moreover, the quantization step adjustment may be performed in a different manned for the blocks encoded using spatial, temporal uni- or bi-directional prediction. In particular, a different rule for adjusting the quantization step may apply. For instance, the intra-coded blocks adjustment may be performed so as to result in smaller quantization step adjustment, for instance, by applying curve 950 with a more flat shape.

In addition to adapting the quantization step size, adaptation of decision thresholds may be performed in accordance with another embodiment of the present invention.

The decision thresholds 330 between adjacent representation values 320 of a quantizer 300 are controlled by the so-called dead zone parameters as described above with reference to Figure 3. For simplicity, indexes *i, j* addressing the particular transformation coefficients within the matrix thereof are left out in this description (cf. Figure 10). The adjustment of the dead-zone parameters have already been discussed in the Section "Background of the Invention". In general, the use of these dead zone parameters is known to be efficient for sources having a Laplacian distribution. This adjustment is most efficient for a non-changing quantization step size. The optimum parameter $\Theta$, which minimizes the mean squared error in the case of Laplacian distributed signals depends on the quantization step sizes. For instance, $\Theta$ is approximately 0.5 in the case of very fine quantization, referring to a very small quantization step size. Parameter $\Theta$ is smaller than 0.5 in the case of higher quantization step sizes referring to a coarser quantization.

In the case that the quantization step size is adjusted per block dependent on $\delta(\overline{Y})$, it can be useful to adjust also the dead zone parameter from $\Theta$ to $\Theta_{WF}$, such that the mean squared error is still maintained on its minimum. The new quantization offset $\Theta_{WF}(\Delta(QP)+\delta(\overline{Y}))$, which includes the parameter $\Theta_{WF}$, is also indicated in Figure 10, quantizer 1002 . This adjustment from $\Theta$ to $\Theta_{WF}$ may be performed as follows:

$$\Theta_{WF} \cdot (\Delta(QP) + \delta(\overline{Y})) = 1 - \alpha \cdot e^{-\alpha} \cdot \frac{1}{(1 - e^{-\alpha})}; \quad \alpha = \sqrt{2} \cdot \frac{(\Delta(QP) + \delta(\overline{Y}))}{\sigma};$$

wherein the parameter σ may be calculated from the quantization offset Δ(*QP*) and assuming the Laplacian distribution using the following equation:

$$\Theta \cdot \Delta(QP) = 1 - \alpha \cdot e^{-\alpha} \cdot \frac{1}{(1 - e^{-\alpha})}; \quad \alpha = \sqrt{2} \cdot \frac{\Delta(QP)}{\sigma};$$

This adjustment can be implemented by using a look-up table.

The integer DCT applied in H.264/MPEG-4 AVC as described above multiplies the transformed but not normalized coefficients by the matrix $S_4$ or $S_8$ (depending on the transformation size) in order to adjust the energy of the coefficients and the division operation by the quantization step size. This is often realized by one multiplication of the non-energy-adjusted coefficients by a factor called quant_scale, followed by a bit shift to the right, which equals to a division. During the inverse quantization, the scaling of the indexes $sn_{i,j}$ by the quantization step size and the energy adjustment multiplication also includes an multiplication by a factor called iquant_scale. The factors iquant_scale and quant_scale, which are used in the quantization and inverse quantization process, are each a product of the quantization step size and a normalizing factor. Thus, in order to adapt them to the adjusted quantization step size, the parameters iquant_scale and quant_scale are both split into the products. Then, the implicit luminance-dependent step size adjustment is performed in accordance with the present invention. The result is an adjusted quantization step size. This adjusted quantization step size is then multiplied by each normalizing factor resulting in adjusted iquant_scale and quant_scale.

In the following, coding and transmission of quantization step adjustment parameters in accordance with yet another embodiment of the present invention is described.

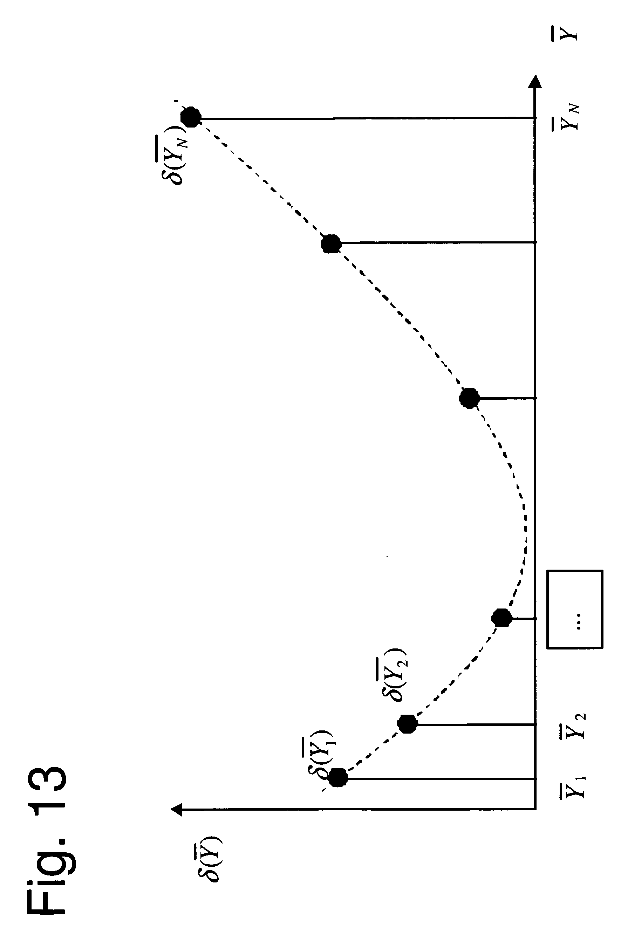

In order to efficiently signalize a curve such as the curve 950 of Figure 9, it is sampled at the sampling positions $\overline{Y}_1, ..., \overline{Y}_N$ and the values $\delta(\overline{Y}_1), ..., \delta(\overline{Y}_N)$ are quantized. This results in the sampling points as shown in Figure 13. Such a sampling results in N vectors $(\overline{Y}_1, \delta(\overline{Y}_1)), ..., (\overline{Y}_N, \delta(\overline{Y}_N))$. The coding is preferably performed in two steps.

In the first step, the number N is encoded for instance, with a variable or a fixed length code. The range of mean luminance $\overline{Y}$ can be exploited, for example, if $\overline{Y}$ is represented with 8 bits, the maximum number N is 256. In the case of a fixed length code, N should be coded with 8 bit. In the second step, the N vectors $(Y_N, \delta(Y_N))$ may be coded and transmitted in the sequence header as shown in the following example.

| Description |
|---|
| sequence() or slice() or frame() |
| { |
| ... |
| **Use_Weber_Fechner_Quantization** |
| ... |
| If (Use Weber_Fechner_Quantization!=0) |
| { |
| **N** |
| for (i=0;i<N;i++) |
| { |
| $\overline{Y_i}$ |
| $\delta(\overline{Y_i})$ |
| } |
| } |
| ... |
| } |

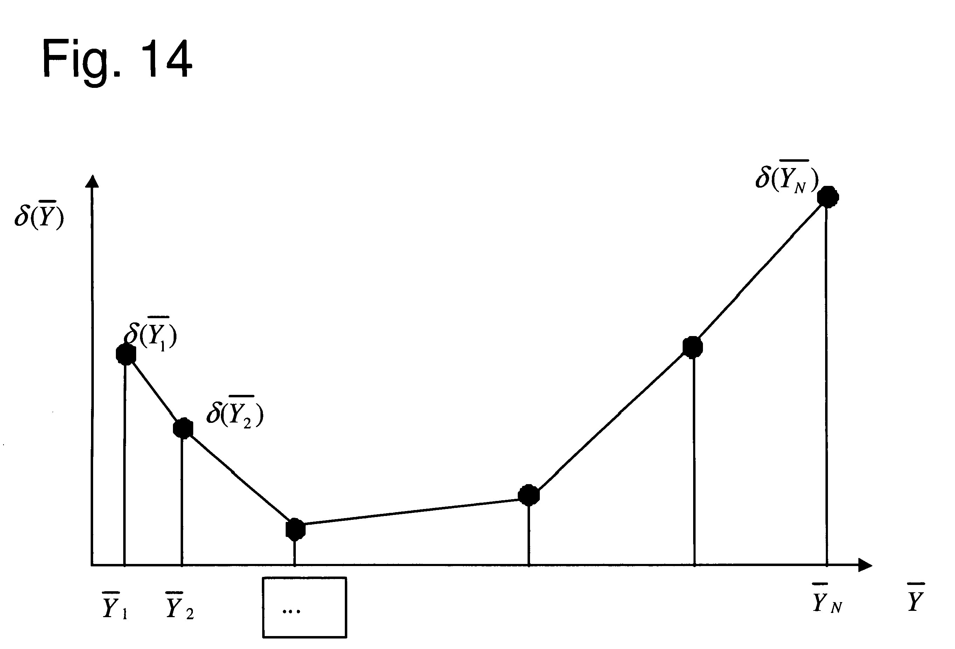

At the coder side as well as at the decoder side, a curve is interpolated by the use of the same sampling points. This can be performed, for instance, by linear interpolation or by cubic or bicubic interpolation. One simple approach is the bilinear interpolation as illustrated in Figure 14.

The above introduced example syntax for signalizing the quantization adjustment parameters includes a parameter called **Use_Weber_Fechner_Quantization,** which allows to switch on/off the quantization adjustment according to the present invention (luminance dependent quantization step size adjustment) for the whole sequence. A similar syntax element could also be used for each frame, slice, or block.

For each frame or slice, two additional parameters are coded and transmitted: an offset parameter: **Offset** and a **scale** parameter Scale. These two parameters are used to scale and shift the curve shown in Figure 14. The shifted and scaled vectors are $(Y_1, offset + scale. \delta(Y_1))$ ,..., $(\overline{Y}_N , offset + sclae. \delta(Y_N))$. The interpolation curve (after the Offset and Scale adjustment) is used in the encoder as well as in the decoder for the luminance dependent quantization step size adjustment of a frame or slice as explained above. The corresponding example syntax is as follows:

| Description |
|---|
| slice() or frame() |
| { |
| ... |
| If (Use Weber_Fechner_Quantization!=0) |
| { |
| **Offset** |
| **Scale** |
| } |
| ... |
| } |

The above described embodiments represents only examples of the present invention. Up to now, only handling of a general luminance signal have been described. However, the present invention may be equally applied to the chrominance signals. The quantization step of the chrominance signals may be determined with regard to the chrominance value in the image area. The signalling of the side information could be performed using a syntax similar to the syntax already described for the luminance. Alternatively, a rule for setting the quantization step size, may be fixed without need for an additional signalling.

The above embodiments have been described mainly with regard to the H.264/MPEG-4 AVC, which is a video encoder/decoder standard. However, the present invention is equally le for any video encoding/decoding standard applying quantization. Moreover, the present invention is also particularly suitable for compression of still images.

The image areas of the present invention, for which the quantization step is determined and the quantization is performed, are in most above described examples the blocks used for the transformation. However, the present invention is not limited thereto. Practically any image areas may be selected. In particular, it may be advantageous to pre-segment the image signal according to its luminance and to determine the image areas as image regions with substantially similar luminance value. The determining and applying of the quantization step may then be performed separately for these areas. Moreover, the above examples mainly related to quantization of the transformation coefficients. However, the present invention may be applied in the same way also directly for quantization of the PCM values of the input image signal or for quantizing of the prediction error (DPCM) signal without transforming it. This may be advantageous, for instance, for intra-coded image areas and/or for image encoding/decoding methods that do not apply the transformation.

Figure 15 illustrates a system for transferring encoded video data from an encoder side to a decoder side in accordance with the present invention. An input video signal is encoded by an encoder 1501 and provided to a channel 1502. The encoder 1501 is an encoder in accordance with any of the embodiments of the present invention as described above. The channel 1502 is either storage or any transmission channel. The storage may be, for instance, any volatile or non-volatile memory, any magnetic or optical medium, a mass-storage, etc. The transmission channel may be formed by physical resources of any transmission system, wireless or wired, fixed or mobile, such as xDSL, ISDN, WLAN, GPRS, UMTS, Internet, or any standardized or proprietary system. Apart from the encoder, the encoder side may also include preprocessing of the input video signal such as format conversion and/or transmitter for transmitting the encoded video signal over the channel 1502 or an application for transferring the encoded video signal into the storage. The encoded video signal is then obtained from the channel 1502 by a decoder 1503. The decoder 1503 is a decoder in accordance with any embodiment of the present invention as described above. The decoder decodes the encoded video signal. Apart from the decoder, the decoder side may further include a receiver for receiving the encoded video signal from a transmission channel, or an application for extracting the encoded video data from the storage, and/or post-processing means for post processing of the decoded video signal, such as format conversion.

According to a further embodiment, it is possible to easily perform the processing shown in the above embodiments in an independent computing system by recording a program for realizing the picture coding method and the picture decoding method shown in the above-mentioned embodiments onto the storage medium such as a flexible disk.

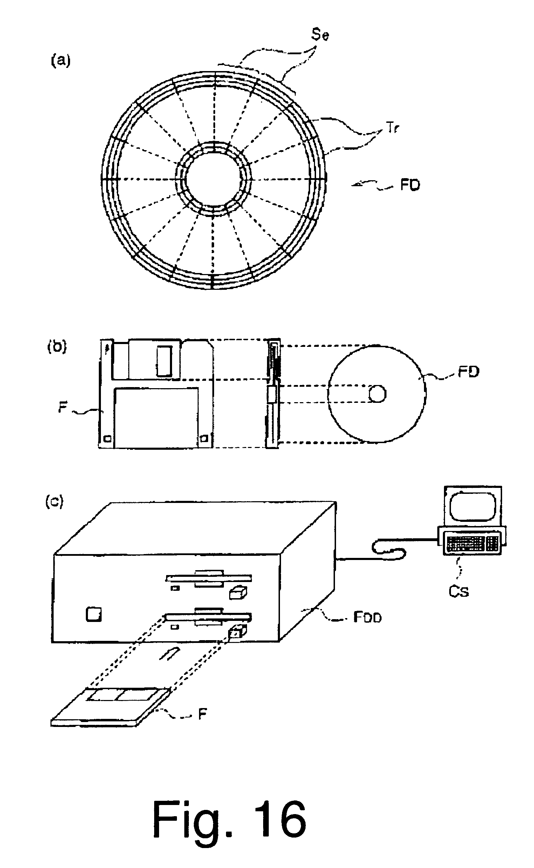

Figure 16 is an illustration of a recording medium for storing a program for realizing any of the described embodiments by a computer system.

Figure 16, part (b) shows a full appearance of a flexible disk, its structure at cross section and the flexible disk itself whereas Figure 16, part (a) shows an example of a physical format of the flexible disk as a main body of a storing medium. A flexible disk FD is contained in a case F, a plurality of tracks Tr are formed concentrically from the periphery to the inside on the surface of the disk, and each track is divided into 16 sectors Se in the angular direction. Therefore, as for the flexible disk storing the above-mentioned program, data as the aforementioned program is stored in an area assigned for it on the flexible disk FD.

Figure 16, part (c) shows a structure for recording and reading out the program on the flexible disk FD. When the program is recorded on the flexible disk FD, the computing system Cs writes in data as the program via a flexible disk drive. When the coding device and the decoding device are constructed in the computing system by the program on the flexible disk, the picture coding method and a picture decoding method as the program is read out from the flexible disk drive and then transferred to the computing system Cs.

The above explanation is made on an assumption that a storing medium is a flexible disk, however, the same processing can also be performed using an optical disk. In addition, the storing medium is not limited to a flexible disk and an optical disk, but any other medium such as an IC card and a ROM cassette capable of recording a program can be used.

According to still another embodiment, the following is an explanation of the applications of the picture coding method as well as the picture decoding method as shown in the above-mentioned embodiments, and a system using them.

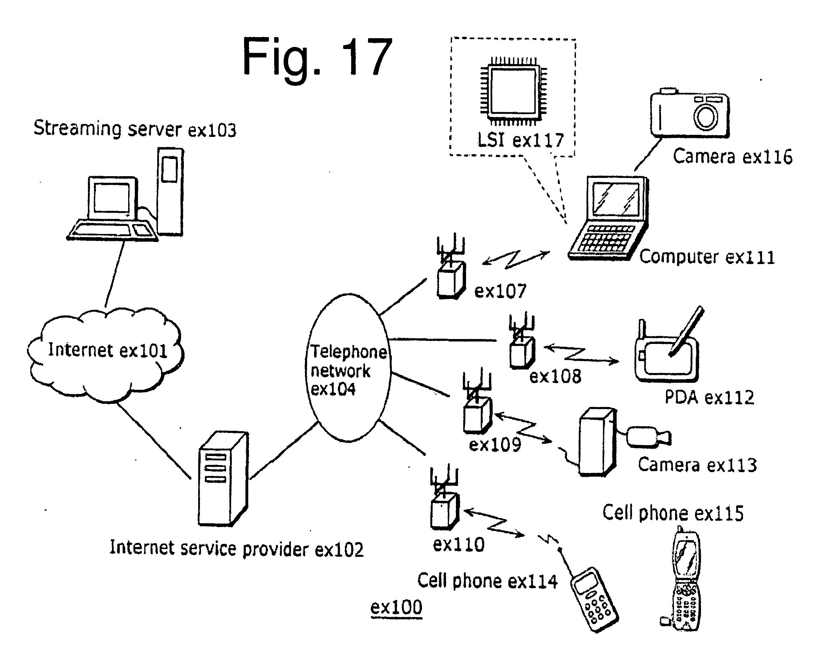

Figure 17 is a block diagram showing an overall configuration of a content supply system ex100 for realizing content distribution service. The area for providing communication service is divided into cells of desired size, and cell sites ex107 to ex110, which are fixed wireless stations are placed in respective cells.

This content supply system ex100 is connected to devices such as Internet ex101, an Internet service provider ex102, a telephone network ex104, as well as a computer ex111, a PDA (Personal Digital Assistant) ex112, a camera ex113, a cell phone ex114 and a cell phone with a camera ex115 via the cell sites ex107 to ex110.

However, the content supply system ex100 is not limited to the configuration as shown in Figure 17 and may be connected to a combination of any of them. Also, each device may be connected directly to the telephone network ex104, not through the cell sites ex107 to ex110.

The camera ex113 is a device capable of shooting video such as a digital video camera. The cell phone ex114 may be a cell phone of any of the following system: a PDC (Personal Digital Communications) system, a CDMA (Code Division Multiple Access) system, a W-CDMA (Wideband-Code Division Multiple Access) system or a GSM (Global System for Mobile Communications) system, a PHS (Personal Handyphone System) or the like.

A streaming server ex103 is connected to the camera ex113 via the telephone network ex104 and also the cell site ex109, which realizes a live distribution or the like using the camera ex113 based on the coded data transmitted from the user. Either the camera ex113 or the server which transmits the data may code the data. Also, the picture data shot by a camera ex116 may be transmitted to the streaming server ex103 via the computer ex111. In this case, either the camera ex116 or the computer ex111 may code the picture data. An LSI ex117 included in the computer ex111 or the camera ex116 actually performs coding processing. Software for coding and decoding pictures may be integrated into any type of storage medium (such as a CD-ROM, a flexible disk and a hard disk) that is a recording medium which is readable by the computer ex111 or the like. Furthermore, a cell phone with a camera ex115 may transmit the picture data. This picture data is the data coded by the LSI included in the cell phone ex115.

The content supply system ex100 codes contents (such as a music live video) shot by a user using the camera ex113, the camera ex116 or the like in the same way as shown in the above-mentioned embodiments and transmits them to the streaming server ex103, while the streaming server ex103 makes stream distribution of the content data to the clients at their requests.

The clients include the computer ex111, the PDA ex112, the camera ex113, the cell phone ex114 and so on capable of decoding the above-mentioned coded data. In the content supply system ex100, the clients can thus receive and reproduce the coded data, and can further receive, decode and reproduce the data in real time so as to realize personal broadcasting.

When each device in this system performs coding or decoding, the picture coding method or the picture decoding method shown in the above-mentioned embodiments can be used.

A cell phone will be explained as an example of the device.

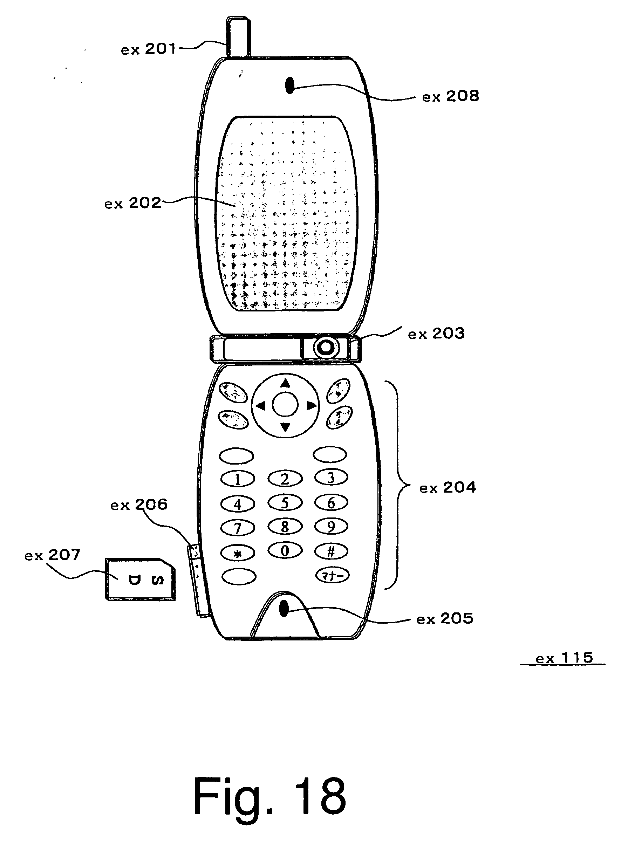

Figure 18 is a diagram showing the cell phone ex115 using the picture coding method and the picture decoding method explained in the above-mentioned embodiments. The cell phone ex115 has an antenna ex201 for communicating with the cell site ex110 via radio waves, a camera unit ex203 such as a CCD camera capable of shooting moving and still pictures, a display unit ex202 such as a liquid crystal display for displaying the data such as decoded pictures and the like shot by the camera unit ex203 or received by the antenna ex201, a body unit including a set of operation keys ex204, a audio output unit ex208 such as a speaker for outputting audio, a audio input unit ex205 such as a microphone for inputting audio, a storage medium ex207 for storing coded or decoded data such as data of moving or still pictures shot by the camera, data of received e-mails and that of moving or still pictures, and a slot unit ex206 for attaching the storage medium ex207 to the cell phone ex115. The storage medium ex207 stores in itself a flash memory element, a kind of EEPROM (Electrically Erasable and Programmable Read Only Memory) that is a nonvolatile memory electrically erasable from and rewritable to a plastic case such as an SD card.

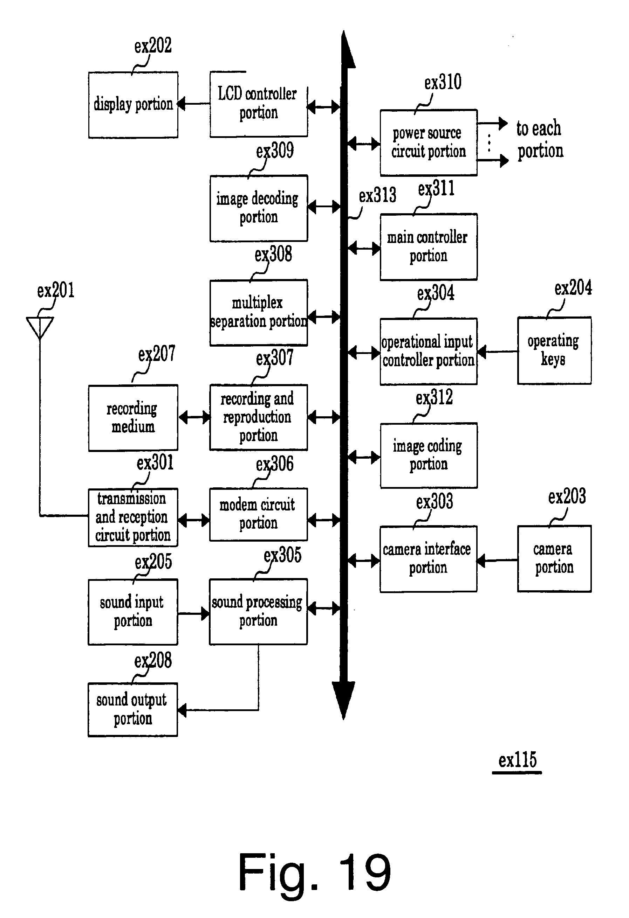

Next, the cell phone ex115 will be explained with reference to Figure 19. In the cell phone ex115, a main control unit ex311, designed in order to control overall each unit of the main body which contains the display unit ex202as well as the operation keys ex204, is connected mutually to a power supply circuit unit ex310, an operation input control unit ex304, a picture coding unit ex312, a camera interface unit ex303, an LCD (Liquid Crystal Display) control unit ex302, a picture decoding unit ex309, a multiplexing/demultiplexing unit ex308, a read/write unit ex307, a modem circuit unit ex306and a audio processing unit ex305via a synchronous bus ex313.

When a call-end key or a power key is turned ON by a user's operation, the power supply circuit unit ex310 supplies respective units with power from a battery pack so as to activate the camera attached digital cell phone ex115 as a ready state.

In the cell phone ex115, the audio processing unit ex305 converts the audio signals received by the audio input unit ex205 in conversation mode into digital audio data under the control of the main control unit ex311 including a CPU, ROM and RAM, the modem circuit unit ex306 performs spread spectrum processing of the digital audio data, and the communication circuit unit ex301 performs digital-to-analog conversion and frequency conversion of the data, so as to transmit it via the antenna ex201. Also, in the cell phone ex115, the communication circuit unit ex301 amplifies the data received by the antenna ex201 in conversation mode and performs frequency conversion and analog-to-digital conversion to the data, the modem circuit unit ex306 performs inverse spread spectrum processing of the data, and the audio processing unit ex305 converts it into analog audio data, so as to output it via the audio output unit ex208.

Furthermore, when transmitting an e-mail in data communication mode, the text data of the e-mail inputted by operating the operation keys ex204 of the main body is sent out to the main control unit ex311 via the operation input control unit ex304. In the main control unit ex311, after the modem circuit unit ex306 performs spread spectrum processing of the text data and the communication circuit unit ex301 performs digital-to-analog conversion and frequency conversion for the text data, the data is transmitted to the cell site ex110 via the antenna ex201.

When picture data is transmitted in data communication mode, the picture data shot by the camera unit ex203 is supplied to the picture coding unit ex312 via the camera interface unit ex303. When it is not transmitted, it is also possible to display the picture data shot by the camera unit ex203 directly on the display unit ex202 via the camera interface unit ex303 and the LCD control unit ex302.

The picture coding unit ex312, which includes the picture coding apparatus as explained in the present invention, compresses and codes the picture data supplied from the camera unit ex203 by the coding method used for the picture coding apparatus as shown in the above-mentioned first embodiment so as to transform it into coded picture data, and sends it out to the multiplexing/demultiplexing unit ex308. At this time, the cell phone ex115 sends out the audio received by the audio input unit ex205 during the shooting with the camera unit ex203 to the multiplexing/demultiplexing unit ex308 as digital audio data via the audio processing unit ex305.

The multiplexing/demultiplexing unit ex308 multiplexes the coded picture data supplied from the picture coding unit ex312 and the audio data supplied from the audio processing unit ex305 using a predetermined method, then the modem circuit unit ex306 performs spread spectrum processing of the multiplexed data obtained as a result of the multiplexing, and lastly the communication circuit unit ex301 performs digital-to-analog conversion and frequency conversion of the data for the transmission via the antenna ex201.

As for receiving data of a moving picture file which is linked to a Web page or the like in data communication mode, the modem circuit unit ex306 performs inverse spread spectrum processing of the data received from the cell site ex110 via the antenna ex201, and sends out the multiplexed data obtained as a result of the inverse spread spectrum processing.

In order to decode the multiplexed data received via the antenna ex201, the multiplexing/demultiplexing unit ex308 separates the multiplexed data into a bit stream of picture data and that of audio data, and supplies the coded picture data to the picture decoding unit ex309 and the audio data to the audio processing unit ex305 respectively via the synchronous bus ex313.

Next, the picture decoding unit ex309, including the picture decoding apparatus as explained in the above-mentioned invention, decodes the bit stream of picture data using the decoding method corresponding to the coding method as shown in the above-mentioned embodiments to generate reproduced moving picture data, and supplies this data to the display unit ex202 via the LCD control unit ex302, and thus the picture data included in the moving picture file linked to a Web page, for instance, is displayed.

At the same time, the audio processing unit ex305 converts the audio data into analog audio data, and supplies this data to the audio output unit ex208, and thus the audio data included in the moving picture file linked to a Web page, for instance, is reproduced.

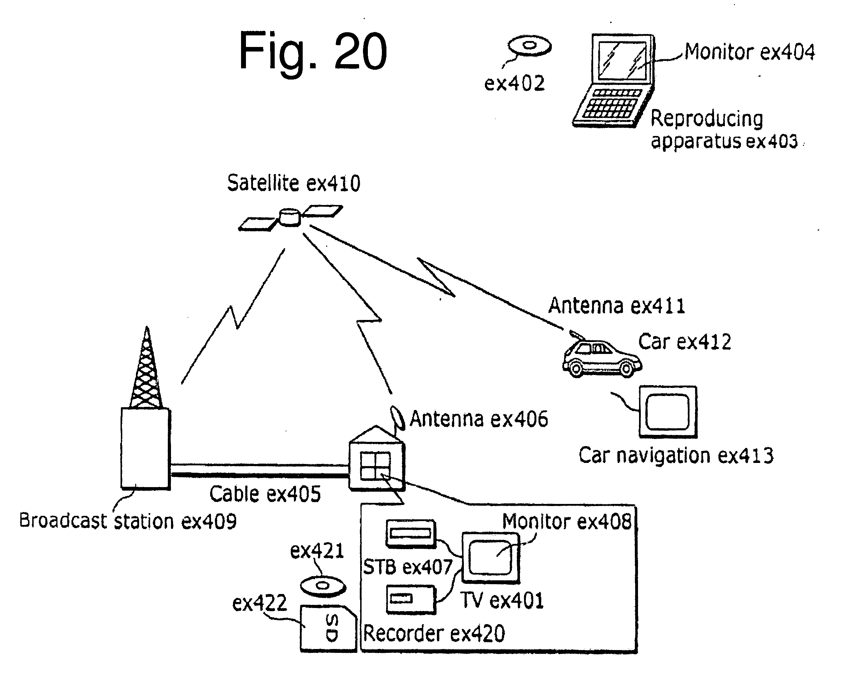

The present invention is not limited to the above-mentioned system as such ground-based or satellite digital broadcasting has been in the news lately and at least either the picture coding apparatus or the picture decoding apparatus described in the above-mentioned embodiments can be incorporated into a digital broadcasting system as shown in Figure 20. More specifically, a bit stream of video information is transmitted from a broadcast station ex409 to or communicated with a broadcast satellite ex410 via radio waves.

Upon receipt of it, the broadcast satellite ex410 transmits radio waves for broadcasting. Then, a home-use antenna ex406 with a satellite broadcast reception function receives the radio waves, and a television (receiver) ex401 or a set top box (STB) ex407 decodes the bit stream for reproduction. The picture decoding apparatus as shown in the above-mentioned embodiment can be implemented in the reproducing apparatus ex403 for reading out and decoding the bit stream recorded on a storage medium ex402 that is a recording medium such as CD and DVD. In this case, the reproduced video signals are displayed on a monitor ex404. It is also conceivable to implement the picture decoding apparatus in the set top box ex407 connected to a cable ex405 for a cable television or the antenna ex406 for satellite and/or ground-based broadcasting so as to reproduce them on a monitor ex408 of the television ex401. The picture decoding apparatus may be incorporated into the television, not in the set top box. Also, a car ex412 having an antenna ex411 can receive signals from the satellite ex410 or the cell site ex107 for reproducing moving pictures on a display device such as a car navigation system ex413 set in the car ex412.

Furthermore, the picture coding apparatus as shown in the above-mentioned embodiments can code picture signals and record them on a recording medium. As a concrete example, a recorder ex420 such as a DVD recorder for recording picture signals on a DVD disk ex421, a disk recorder for recording them on a hard disk can be cited. They can be recorded on an SD card ex422. If the recorder ex420 includes the picture decoding apparatus as shown in the above-mentioned embodiments, the picture signals recorded on the DVD disk ex421 or the SD card ex422 can be reproduced for display on the monitor ex408. As for the structure of the car navigation system ex413, the structure without the camera unit ex203, the camera interface unit ex303 and the picture coding unit ex312, out of the components shown in Figure19, is conceivable. The same applies for the computer ex111, the television (receiver) ex401 and others.

In addition, three types of implementations can be conceived for a terminal such as the above-mentioned cell phone ex114; a sending/receiving terminal implemented with both a coder and a decoder, a sending terminal implemented with a coder only, and a receiving terminal implemented with a decoder only. As described above, it is possible to use the picture coding method or the picture decoding method described in the above-mentioned embodiments for any of the above-mentioned devices and systems, and by using this method, the effects described in the above-mentioned embodiments can be obtained.

Another embodiment of the invention relates to the implementation of the above described various embodiments using hardware and software. It is recognized that the various embodiments of the invention may be implemented or performed using computing devices (processors). A computing device or processor may for example be general-purpose processors, digital signal processors (DSP), application specific integrated circuits (ASIC), field programmable gate arrays (FPGA) or other programmable logic devices, etc. The various embodiments of the invention may also be performed or embodied by a combination of these devices.

Further, the various embodiments of the invention may also be implemented by means of software modules, which are executed by a processor or directly in hardware. Also a combination of software modules and a hardware implementation may be possible. The software modules may be stored on any kind of computer readable storage media, for example RAM, EPROM, EEPROM, flash memory, registers, hard disks, CD-ROM, DVD, etc.

Most of the examples have been outlined in relation to an H.264/AVC based video coding system, and the terminology mainly relates to the H.264/AVC terminology. However, this terminology and the description of the various embodiments with respect to H.264/AVC based coding is not intended to limit the principles and ideas of the invention to such systems. Also the detailed explanations of the encoding and decoding in compliance with the H.264/AVC standard are intended to better understand the exemplary embodiments described herein and should not be understood as limiting the invention to the described specific implementations of processes and functions in the video coding. Nevertheless, the improvements proposed herein may be readily applied in the video coding described. Furthermore the concept of the invention may be also readily used in the enhancements of H.264/AVC coding currently discussed by the JVT.

Summarizing the present invention enables controlling the quantization step size locally and implicitly in the same way at the encoder and the decoder side. The quantization step size is determined for different image areas of an image individually based on their luminance. Such quantization step size setting allows for exploiting the luminance-dependent sensitivity of the human visual system.

**Claims**

1.  A method for encoding an image signal (1101) including a plurality of image areas, each image area having at least one pixel, the method comprising the steps of:

    determining (1160) for an image area a quantization step size (1010) according to a luminance of the image area or its adjacent pixels; and
    quantizing (1110) the image area with a quantizer (1002) using the determined quantization step size (1010).

2.  A method for decoding an encoded image signal (1201) including a plurality of image areas, each image area having at least one pixel, the method comprising the steps of:

    determining (1230) for an image area a quantization step size (1010) according to a luminance of the image area or its adjacent pixels; and
    inverse quantizing (1220) the image area with an inverse quantizer (1002) using the determined quantization step size (1010).

3.  The method according to claim 1 or 2, wherein the image signal is divided into a plurality of blocks and the method further comprises the step of:

    transformation (1110, 1220) of a block of pixel values into a block of transformation coefficients,
    wherein the step of determining (1160, 1230) the quantization step is performed according to luminance of said block of pixel values or its adjacent pixels and the step of quantization (1110) or inverse quantization (1120, 1220) is applied to the block of transformation coefficients.

4.  The method according to any of claims 1 to 3 further comprising the step of:

    estimating (1150, 1260) spatially or temporally the pixels of the image area (1101) by a prediction signal (1151,1261); and
    calculating a local mean luminance value as a mean of the prediction signal (1151, 1261),
    wherein the quantization step for quantizing the image area is determined (1160, 1230) based on the calculated local mean luminance value.

5. The method according to any of claims 1 to 4 wherein
   the step of determining (1160, 1230) the quantization step size is performed in accordance with a predefined rule; and
   the predefined rule (960) specifies a relation between luminance and the quantization step size so that the resulting quantization noise remains unnoticeable for a human.

6. The method according to claim 5 wherein the predefined rule is embedded within the bitstream (1191, 1201) of the encoded video signal.

7. The method according to any of claims 1 to 6 wherein the quantization step size is determined (1160, 1230) as a sum of a predefined target quantization step size ($\Delta$) which is independent of luminance and a quantization step offset ($\delta(Y)$) determined based on luminance of the image area or its adjacent pixels.

8. A computer program product comprising a computer readable medium having a computer readable program code embodied thereon, the program code being adapted to carry out the method according to any of claims 1 to 7.

9. An apparatus for encoding an image signal (1101) including a plurality of image areas, each image area having at least one pixel, the apparatus comprising:

   a quantization adjustment unit (1160) for determining for an image area a quantization step size (1010) according to a luminance of the image area or its adjacent pixels; and
   a quantizer (1110) for quantizing the image area using the determined quantization step size (1010).

10. An apparatus for decoding an encoded image signal (1201) including a plurality of image areas, each image area having at least one pixel, the apparatus comprising:

    a quantization adjustment unit (1230) for determining for an image area a quantization step size (1010) according to a luminance of the image area or its adjacent pixels; and
    an inverse quantizer (1220) for inverse quantizing the image area using the determined quantization step size (1010).

11. The apparatus according to claim 9 or 10, wherein the image signal is divided into a plurality of blocks and the apparatus further comprises:

    a transformation unit (1110, 1220) for transforming of a block of pixel values into a block of transformation coefficients,
    wherein the quantization adjustment unit (1160, 1230) is configured to determine the quantization step according to luminance of said block of pixel values or its adjacent pixels and the quantizer (1110) or inverse quantizer (1120, 1220) is applied to the block of transformation coefficients.

12. The apparatus according to any of claims 9 to 11 further comprising:

    an estimator (1150, 1260) for estimating spatially or temporally the pixels of the image area (1101) by a prediction signal (1151, 1261); and
    a mean determining unit for calculating a local mean luminance value as a mean of the prediction signal (1151, 1261),
    wherein the quantizing step for quantizing the image area is determined based on the calculated local mean luminance value.

13. The apparatus according to any of claims 9 to 12 wherein
    the quantization adjustment unit (1160, 1230) is configured to determine the quantization step size in accordance with a predefined rule; and
    the predefined rule (960) specifies a relation between luminance and the quantization step size so that the resulting quantization noise remains unnoticeable for a human.

14. The apparatus according to claim 13 wherein the predefined rule is embedded within the bitstream (1191, 1201) of the encoded video signal.

15. The apparatus according to any of claims 9 to 14 wherein the quantization step size is determined (1160, 1230) as a sum of a predefined target quantization step size ($\Delta$) which is independent of luminance and a quantization step offset ($\delta(Y)$) determined based on luminance of the image area or its adjacent pixels.

# Fig. 1

Fig. 1

EP 2 317 769 A1

# Fig. 2

```
         210                    220          Quantized      230                   240          Decoded
                                             prediction                                        Signal
                                             error signal          231
   ┌──────────┐      ┌──────────────────┐              ⊕                  ┌──────────────┐
→→→│ Entropy  │→→→→→→│ Inverse Quant.   │→→→→→→→→→→→→→→→ │ →→→→→→→→→→→→→→→→→ │ Deblocking   │→→→→→•→→→
   │ Decoding │      │ Inverse Transform│              ↑   Reconstructed  │ Filter       │        │
   └──────────┘      └──────────────────┘              │   Signal         └──────────────┘        │
                                                       │                                          │
   201                                        221      │                                     241  │
                                                       │                                          │
                              200                      │                        250               │
                                             251        │                 ┌──────────────┐        │
                                                       │←←←←←←←←←←←←←←←←←← │ Motion Comp. │←←←←←←←←←←┘
                                             Prediction                   │ Prediction   │
                                             Signal                       └──────────────┘
```

# Fig. 3

# Fig. 4

EP 2 317 769 A1

# Fig. 5

# Fig. 6

EP 2 317 769 A1

# Fig. 7

710

$\Delta + \delta(Y)$   $\Delta + \delta(Y)$   $\Delta + \delta(Y)$   $\Delta + \delta(Y)$

700

$\dfrac{\Delta+\delta(Y)}{2}$   $\dfrac{\Delta+\delta(Y)}{2}$   $\dfrac{\Delta+\delta(Y)}{2}$   $\dfrac{\Delta+\delta(Y)}{2}$

$Y$

0

**Representation values**   **Decision thresholds**

# Fig. 15

1500

1501

1502

1503

encoder side → channel → decoder side

EP 2 317 769 A1

Fig. 8

Fig. 9

$\delta(\overline{Y})$

920

910

950

0    80    255    $\overline{Y}$

# Fig. 10

Reference quantizer

Quantizer, which exploits the Weber Fechner law 1010

EP 2 317 769 A1

# Fig. 11

EP 2 317 769 A1

# Fig. 12

EP 2 317 769 A1

# Fig. 13

# Fig. 14

(a)

Se

Tr

FD

(b)

F

FD

(c)

FDD

Cs

F

# Fig. 16

# Fig. 17

Streaming server ex103

LSI ex117

Camera ex116

Computer ex111

ex107

Internet ex101

Telephone
network
ex104

ex108

PDA ex112

ex109

Camera ex113

Internet service provider ex102

ex110

Cell phone ex115

Cell phone ex114

ex100

EP 2 317 769 A1

ex 201

ex 208

ex 202

ex 203

ex 204

ex 206

ex 207

ex 205

ex 115

Fig. 18

ex202

display portion ← LCD controller portion

ex309

image decoding portion

ex308

multiplex separation portion

ex201

ex207

recording medium ← recording and reproduction portion

ex301

transmission and reception circuit portion ← modem circuit portion

ex306

ex205

sound input portion → sound processing portion

ex208

sound output portion

ex310

power source circuit portion → to each portion

ex313 ex311

main controller portion

ex304 ex204

operational input controller portion ← operating keys

ex312

image coding portion

ex303 ex203

camera interface portion ← camera portion

ex305

ex115

Fig. 19

# Fig. 20

ex402

Monitor ex404

Reproducing apparatus ex403

Satellite ex410

Antenna ex411

Car ex412

Antenna ex406

Car navigation ex413

Broadcast station ex409

Cable ex405

Monitor ex408

ex421

STB ex407

ex422

TV ex401

Recorder ex420

EP 2 317 769 A1

Europäisches
Patentamt

European
Patent Office

Office européen
des brevets

# EUROPEAN SEARCH REPORT

**Application Number**

EP 09 01 3755

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2007/058714 A1 (NODA REIKO [JP]) 15 March 2007 (2007-03-15) | 1-3,5, 7-11,13, 15 | INV. H04N7/26 H04N7/50 H04N7/32 |
| A | * abstract * * paragraph [0025] - paragraph [0034]; figures 1,2,4,6,7,11 * * paragraph [0047] - paragraph [0064] * | 4,6,12, 14 | |
| X | EP 1 744 541 A1 (SONY CORP [JP]) 17 January 2007 (2007-01-17) | 1,2,5,6, 8-10,13, 14 | |
| A | * abstract * * paragraph [0041] - paragraph [0077]; figures 3,5-8,10b,11,15 * * claim 14 * | 3,4,7, 11,12,15 | |
| X | ECKERT M P ET AL: "Perceptual quality metrics applied to still image compression - A technique for visual optimization of DCT quantization matrices for individual images" SIGNAL PROCESSING, ELSEVIER SCIENCE PUBLISHERS B.V. AMSTERDAM, NL LNKD-DOI:10.1016/S0165-1684(98)00124-8, vol. 70, no. 3, 30 November 1998 (1998-11-30), pages 177-200, XP004144965 ISSN: 0165-1684 | 1-3,8-11 | |
| A | * abstract * * section 3.2.1 * | 4-7, 12-15 | |

-/--

**TECHNICAL FIELDS SEARCHED (IPC)**

H04N

The present search report has been drawn up for all claims

| Place of search | Date of completion of the search | Examiner |
|---|---|---|
| Berlin | 19 May 2010 | Heising, Guido |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

Application Number

EP 09 01 3755

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | OOSTVEEN J ET AL: "Adaptive quantization watermarking" PROCEEDINGS OF SPIE - THE INTERNATIONAL SOCIETY FOR OPTICAL ENGINEERING - SECURITY, STEGANOGRAPHY, AND WATERMAKING OF MULTIMEDIA CONTENTS VI 2004 SPIE US LNKD- DOI:10.1117/12.526586, vol. 5306, 2004, pages 296-303, XP002582989 | 1,2,5, 8-10,13 | |
| A | * abstract * <br> * section 4 with figure 1 * <br><br> ----- | 3,4,6,7, 11,12, 14,15 | |
| | | | TECHNICAL FIELDS SEARCHED (IPC) |

The present search report has been drawn up for all claims

| Place of search | Date of completion of the search | Examiner |
|---|---|---|
| Berlin | 19 May 2010 | Heising, Guido |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

......................................................................................
& : member of the same patent family, corresponding
   document

EPO FORM 1503 03.82 (P04C01)

## ANNEX TO THE EUROPEAN SEARCH REPORT
## ON EUROPEAN PATENT APPLICATION NO.

EP 09 01 3755

This annex lists the patent family members relating to the patent documents cited in the above-mentioned European search report.
The members are as contained in the European Patent Office EDP file on
The European Patent Office is in no way liable for these particulars which are merely given for the purpose of information.

19-05-2010

| Patent document cited in search report | | Publication date | Patent family member(s) | | Publication date |
|---|---|---|---|---|---|
| US 2007058714 | A1 | 15-03-2007 | JP 2007081474 | A | 29-03-2007 |
| EP 1744541 | A1 | 17-01-2007 | CN 1943221 | A | 04-04-2007 |
| | | | JP 4385841 | B2 | 16-12-2009 |
| | | | JP 2005311743 | A | 04-11-2005 |
| | | | WO 2005104526 | A1 | 03-11-2005 |
| | | | KR 20070012668 | A | 26-01-2007 |
| | | | TW 288360 | B | 11-10-2007 |
| | | | US 2007196023 | A1 | 23-08-2007 |

EPO FORM P0459

For more details about this annex : see Official Journal of the European Patent Office, No. 12/82